(19) Europäisches Patentamt
European Patent Office
Office européen des brevets

(11) EP 4 783 397 A1

(12) EUROPEAN PATENT APPLICATION
published in accordance with Art. 153(4) EPC

(43) Date of publication:
29.07.2026 Bulletin 2026/31

(51) International Patent Classification (IPC):
$H02J\ 3/14^{(2026.01)}$    $H02J\ 3/32^{(2026.01)}$

(21) Application number: 23952980.3

(52) Cooperative Patent Classification (CPC):
H02J 3/14; H02J 3/32; Y02T 10/70; Y02T 10/7072

(22) Date of filing: 19.09.2023

(86) International application number:
PCT/JP2023/033918

(87) International publication number:
WO 2025/062489 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NISSAN MOTOR CO., LTD.
Yokohama-shi, Kanagawa 220-8623 (JP)

(72) Inventors:
• MURAI, Kensuke
Atsugi-shi, Kanagawa 243-0123 (JP)
• KIUCHI, Hironobu
Atsugi-shi, Kanagawa 243-0123 (JP)

(74) Representative: Osha BWB
2, rue de la Paix
75002 Paris (FR)

(54) POWER SUPPLY AND DEMAND SYSTEM AND CHARGE AND DISCHARGE MANAGEMENT METHOD FOR ELECTRIC VEHICLE

(57) An electric vehicle group power management device (30) generates an electric vehicle group available power plan including at least a peak-cut power plan which is a charging and discharging plan of a charging and discharging device (40) such that a peak of a power supply and demand plan which predicts power supply and demand of an entirety of the power supply and demand system (2) is suppressed, and outputs the electric vehicle group available power plan to a power supply and demand management device (20). The power supply and demand management device (20) corrects the electric vehicle group available power plan based on at least power control information on a facility whose power demand is controllable in the power supply and demand system (1), and outputs the corrected electric vehicle group available power plan to the electric vehicle group power management device (30). The electric vehicle group power management device (30) manages power to be charged and discharged by the charging and discharging device (40) to and from one or more batteries (50) of a group of one or more electric vehicles, based on the corrected electric vehicle group available power plan.

FIG. 1

## Description

TECHNICAL FIELD

The present invention relates to a power supply and demand system and a charging and discharging management method for an electric vehicle.

BACKGROUND ART

Patent Literature 1 discloses an electric power management system for utilizing electric power stored in electric vehicle batteries, at large power demand facilities, such as factories.

CITATION LIST

PATENT LITERATURE

Patent Literature 1: Japanese Patent Application Publication No. 2012-196028

SUMMARY OF INVENTION

PROBLEMS TO BE SOLVED BY INVENTION

In a power management system described in Patent Literature 1, an FEMS control unit provided in a factory facility controls a battery (charger) for an electric vehicle connected to the factory facility, based on power consumption of a factory load of the factory facility. When there is a possibility that the power consumption may exceed a predetermined power, the FEMS control unit of Patent Literature 1 discharges batteries and stationary storage batteries in the factory facility to supplement the power to system power before the power consumption exceeds the predetermined power, and charges the batteries and stationary storage batteries after a period during which the power consumption exceeds the predetermined power, has elapsed.

However, in the power management system, when a control unit for controlling power supply and demand of the entire facility acquires the battery state of individual electric vehicles, and controls the batteries of individual electric vehicles, it is necessary to implement, in the control unit, communication with an electric vehicle of a new model every time an electric vehicle of a new model is added. Thus, in order to realize a power management system corresponding to various electric vehicles, a complicated effort is required.

As a countermeasure against the above, a method can be considered which separates a function of managing charging and discharging of batteries of individual electric vehicles (hereinafter, sometimes referred to as electric vehicle group power management function) from a function of managing power supply and demand of the entire power supply and demand system (hereinafter, sometimes referred to as power supply and demand management function), and allows the electric vehicle group power management function to manage the charging and discharging of batteries of individual electric vehicles, based on an electric vehicle group power plan transmitted from the power supply and demand management function. However, in this method, since the electric vehicle group power management function manages the charging and discharging of batteries of individual electric vehicles, the power supply and demand management function side cannot grasp the battery state of individual electric vehicles. Thus, the power supply and demand management function formulates the electric vehicle group power plan without understanding the individual battery states, and thus a situation may arise where the electric vehicle group power management function cannot cope with the electric vehicle group power plan transmitted from the power supply and demand management function.

The present invention has been made in view of the above issues, and an object thereof is to provide a power supply and demand system and a method of managing charging and discharging of an electric vehicle, capable of controlling charging and discharging of batteries of an electric vehicle group in consideration of power supply and demand of the entire power supply and demand system, while reducing the effort required to cope with batteries of various types of electric vehicles.

SOLUTION TO SOLVE PROBLEMS

An electric vehicle group power management device of a power supply and demand system according to an aspect of one embodiment generates, in consideration of a state of one or more batteries of a group of one or more electric vehicles, an electric vehicle group available power plan including at least a peak-cut power plan which is a charging and discharging plan for the one or more batteries of the group of one or more electric vehicles such that a peak of a power supply and demand plan which predicts a transition of the power supply and demand of an entirety of the power supply and demand system is suppressed. The electric vehicle group power management device outputs the electric vehicle group available power plan to a power supply and demand management device. The power supply and demand management device corrects the electric vehicle group available power plan based on at least power control information on a facility whose power demand is controllable in the power supply and demand system. The power supply and demand management device outputs the corrected electric vehicle group available power plan to the electric vehicle group power management device as an electric vehicle group power plan. The electric vehicle group power management device manages power to be charged and discharged by the charging and discharging device to and from the one or more batteries of the group of one or more electric vehicles, based on the electric vehicle group power plan.

EFFECTS OF INVENTION

According to an aspect of the present embodiment, it is possible to reduce the effort required to cope with batteries of various types of electric vehicles, and control charging and discharging of batteries in a group of electric vehicles, in consideration of power supply and demand of the entire power supply and demand system.

BRIEF DESCRIPTION OF DRAWINGS

[FIG. 1] FIG. 1 is a diagram illustrating an example of the overall configuration of a power management system including a charge and discharge management system according to an embodiment.
[FIG. 2] FIG. 2 is a block diagram illustrating a configuration example of a power supply and demand management device.
[FIG. 3] FIG. 3 is a block diagram illustrating a configuration example of an electric vehicle group power management device.
[FIG. 4] FIG. 4 is a flowchart illustrating an overview of functions and operations of the power supply and demand management device, and electric vehicle group power management in a first embodiment.
[FIG. 5] FIG. 5 is a diagram illustrating an example of a power upper limit plan and a power lower limit plan set by the power supply and demand management device in the first embodiment.
[FIG. 6] FIG. 6 is a flowchart illustrating an example of a process for generating an electric vehicle group available power plan executed by the electric vehicle group power management device in the first embodiment.
[FIG. 7] FIG. 7 is a diagram illustrating a first example of a peak-cut power plan generated by the electric vehicle group power management device in the first embodiment.
[FIG. 8] FIG. 8 is a diagram illustrating a second example of a peak-cut power plan generated by the electric vehicle group power management device in the first embodiment.
[FIG. 9] FIG. 9 is a flowchart illustrating an example of a process for generating a power upper limit plan executed by the power supply and demand management device in the first embodiment.
[FIG. 10] FIG. 10 includes diagrams illustrating an example of a power upper limit plan generated by the power supply and demand management device in the first embodiment.
[FIG. 11] FIG. 11 is a diagram illustrating a first example of a bottom-up power plan generated by the electric vehicle group power management device in a second embodiment.
[FIG. 12] FIG. 12 is a diagram illustrating a second example of the bottom-up power plan generated by the electric vehicle group power management device in the second embodiment.
[FIG. 13] FIG. 13 is a flowchart illustrating an example of a process for determining an electric vehicle group power plan executed by the power supply and demand management device in the second embodiment.
[FIG. 14] FIG. 14 is a flowchart illustrating an example of a process for generating a power lower limit plan executed by the power supply and demand management device in the second embodiment.
[FIG. 15] FIG. 15 is a diagram illustrating an example of a power lower limit plan generated by the power supply and demand management device in the second embodiment.
[FIG. 16] FIG. 16 is a diagram illustrating an example of a demand response request and a demand response power plan in a third embodiment.
[FIG. 17A] FIG. 17A is a flowchart illustrating an example of a process for generating a power upper limit plan executed by the power supply and demand management device in the third embodiment.
[FIG. 17B] FIG. 17B is a flowchart illustrating an example of the process for generating the power upper limit plan executed by the power supply and demand management device in the third embodiment.
[FIG. 18] FIG. 18 is a diagram illustrating a first example of a peak-cut power plan generated by the electric vehicle group power management device in a fourth embodiment.
[FIG. 19] FIG. 19 is a diagram illustrating a second example of a peak-cut power plan generated by the electric vehicle group power management device in the fourth embodiment.
[FIG. 20] FIG. 20 is a diagram illustrating a first example of a bottom-up power plan generated by the electric vehicle group power management device in the fourth embodiment.
[FIG. 21] FIG. 21 is a diagram illustrating a second example of a bottom-up power plan generated by the electric vehicle group power management device in the fourth embodiment.
[FIG. 22] FIG. 22 illustrates a method of selecting one from multiple peak-cut power plans in a variation of the fourth embodiment.

DESCRIPTION OF EMBODIMENTS

[First embodiment]

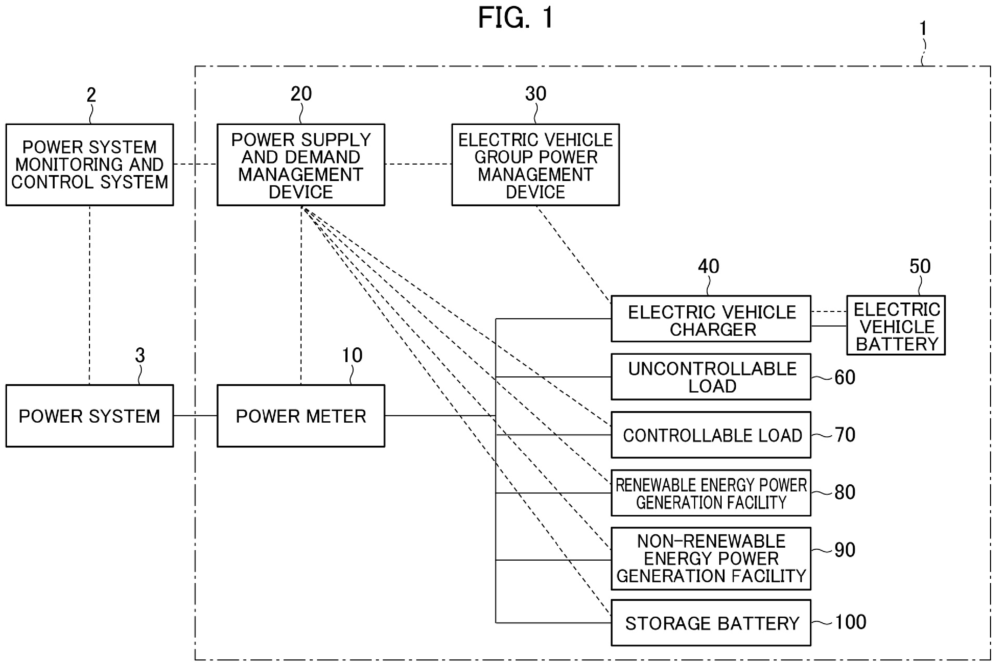

Hereinafter, a first embodiment of the present invention will be described with reference to the drawings.
Referring to FIG. 1, an example of the overall configuration of a power management system including a power supply and demand system 1 according to the first embodiment will be described. The power management system is a system for managing power supply and demand of the entire power supply and demand system 1, such as commercial facilities and factories. As illustrated in FIG. 1, the power management system includes the power supply and demand system 1, a power system monitoring and control system 2, and a power system 3.

The power supply and demand system 1 is a system that manages billing and other matters related to electricity at a facility, a demand location, and the like. Note that the system is not limited to a single demand location, and may be one where multiple demand locations are virtually connected. As illustrated in FIG. 1, the power supply and demand system 1 includes a power meter 10, a power supply and demand management device 20, an electric vehicle group power management device 30, an electric vehicle charger (charging and discharging device) 40, an uncontrollable load 60, a controllable load 70, a renewable energy power generation facility 80, a non-renewable energy power generation facility 90, and a storage battery 100. Note that although FIG. 1 illustrates one each of the electric vehicle charger 40, the uncontrollable load 60, the controllable load 70, the renewable energy power generation facility 80, the non-renewable energy power generation facility 90, and the storage battery 100, the power supply and demand system 1 may include two or more electric vehicle chargers 40, uncontrollable loads 60, controllable loads 70, renewable energy power generation facilities 80, non-renewable energy power generation facilities 90, and storage batteries 100. The power supply and demand system 1 need not include the uncontrollable load 60, the controllable load 70, the renewable energy power generation facility 80, the non-renewable energy power generation facility 90, or the storage battery 100.

The power system 3 is a power system that integrates generation, transformation, transmission, and distribution for supplying AC power from an electric power company to a power receiving facility. In FIG. 1, the electric vehicle charger 40, the uncontrollable load 60, the controllable load 70, the renewable energy power generation facility 80, the non-renewable energy power generation facility 90, and the storage battery 100 correspond to a power receiving facility. The power system 3 is connected via the power meter 10 to each of the electric vehicle charger 40, the uncontrollable load 60, the controllable load 70, the renewable energy power generation facility 80, the non-renewable energy power generation facility 90, and the storage battery 100.

The power meter 10 measures power of the power system 3 used in the power supply and demand system 1. The power meter 10 measures power supplied from the power supply and demand system 1 to the power system 3.

The electric vehicle charger 40 is a device that charges and discharges an electric vehicle battery 50 that is a battery of an electric vehicle and is controlled by the electric vehicle group power management device 30 described below. The electric vehicle charger 40 is connected to the electric vehicle battery 50 through a power connector, for example, and charges the electric vehicle battery 50. The electric vehicle charger 40 also discharges power stored in the electric vehicle battery 50, from the electric vehicle battery 50. Note that a connection method and a charging and discharging method between the electric vehicle charger 40 and the electric vehicle battery 50 are not particularly limited. The electric vehicle charger 40 may be installed not only outside a body of an electric vehicle but also inside an electric vehicle. The electric vehicle charger 40 and the electric vehicle group power management device 30 may be connected through a wire connection, a wireless connection, or a connection via the Internet, for example.

The uncontrollable load 60 is a device or facility whose power demand (power consumption) cannot be controlled by an external command, such as a dryer. In contrast, the controllable load 70 is a facility whose power demand (power consumption) can be controlled by an external command, such as an air conditioner or a lighting facility. The renewable energy power generation facility 80 is a solar power generation facility or a wind power generation facility, whose generatable power varies with time. The non-renewable energy power generation facility 90 is a diesel power generation facility or a hydrogen fuel power generation facility, whose generatable power does not vary with time. The storage battery 100 stores power supplied from the power system 3, the renewable energy power generation facility 80, or the non-renewable energy 90.

The uncontrollable load 60, the controllable load 70, the renewable energy power generation facility 80, the non-renewable energy power generation facility 90, and the storage battery 100 are connected to the power system 3 via the power meter 10. The renewable energy power generation facility 80, the non-renewable energy power generation facility 90, and the storage battery 100 may supply (discharge) power, and supply power to the power system 3 (this is called a reverse power flow). The controllable load 70, the non-renewable energy power generation facility 90, and the storage battery 100 receive power from or supply power to the power system 3 in accordance with an instruction from the power supply and demand management device 20 described below. The electric vehicle charger 40 receives power from the power system 3 in accordance with an instruction from the electric vehicle group power management device 30. The electric vehicle charger 40 may discharge power in accordance with an instruction from the electric vehicle group power management device 30, and supply power to the power system 3.

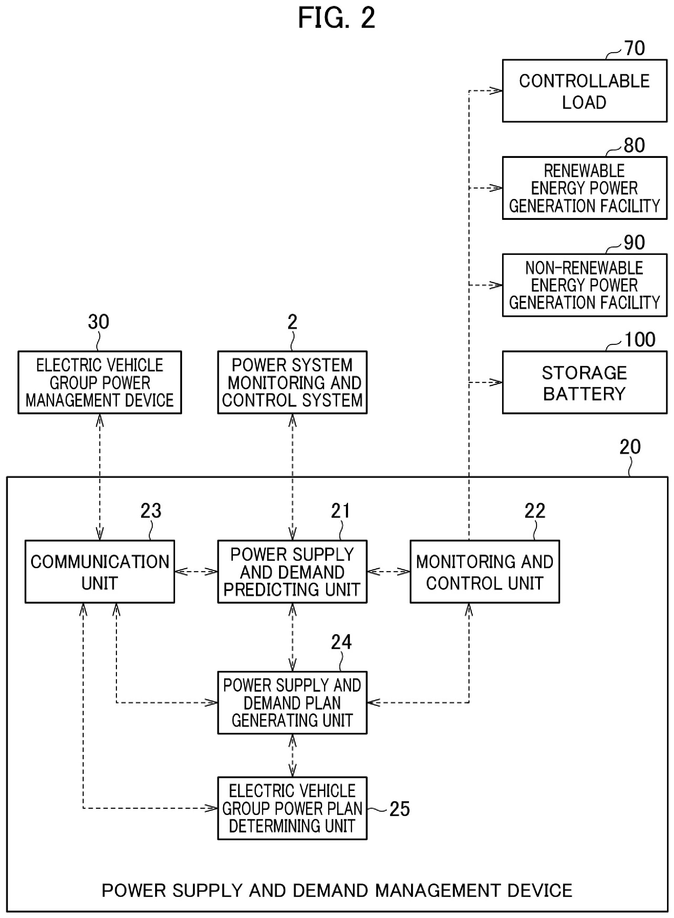

The power supply and demand management device 20 has a function (power supply and demand management function) for managing power supply and demand of the entire power supply and demand system 1 including the electric vehicle charger 40, the uncontrollable load 60, the controllable load 70, the renewable energy power generation facility 80, the non-renewable energy power generation facility 90, and the storage battery 100. The power supply and demand management device 20 includes, as multiple information processors for realizing the power supply and demand management function, a power supply and demand predicting unit 21, a monitoring and control unit 22, a communication unit 23, a power supply and demand plan generating unit 24, and an electric vehicle group power plan determining unit 25, as illustrated in FIG. 2. Each function of the power supply and demand management device 20 will be described below.

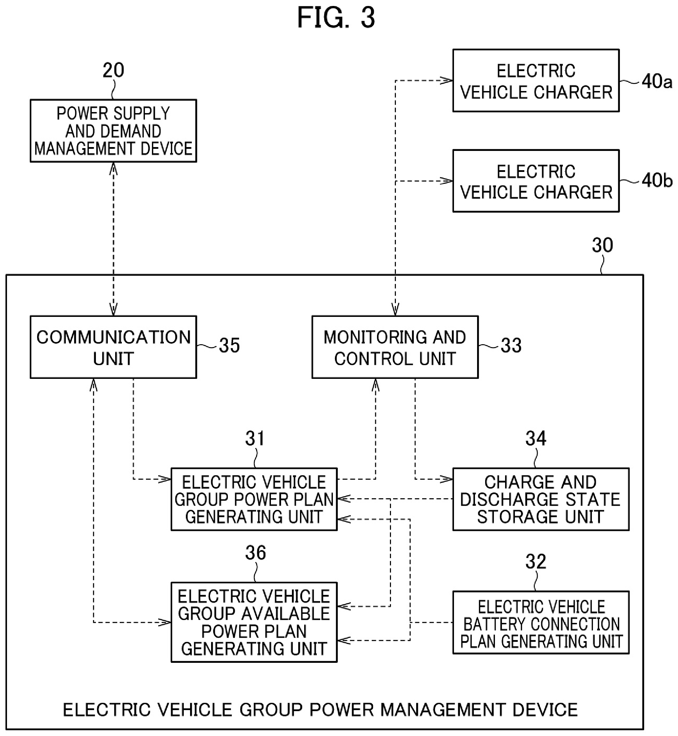

The electric vehicle group power management device 30 has a function (electric vehicle group power management function) for managing power that the electric vehicle charger 40 charges and discharges to and from one or more electric vehicle batteries 50. The electric vehicle group power management device 30 includes, as multiple information processors for realizing the electric vehicle group power management function, an electric vehicle group power plan generating unit 31, an electric vehicle battery connection plan generating unit 32, a monitoring and control unit 33, a charge and discharge state storage unit 34, a communication unit 35, and an electric vehicle group available power plan generating unit 36, as illustrated in FIG. 3. Each function of the electric vehicle group power management device 30 will be described below.

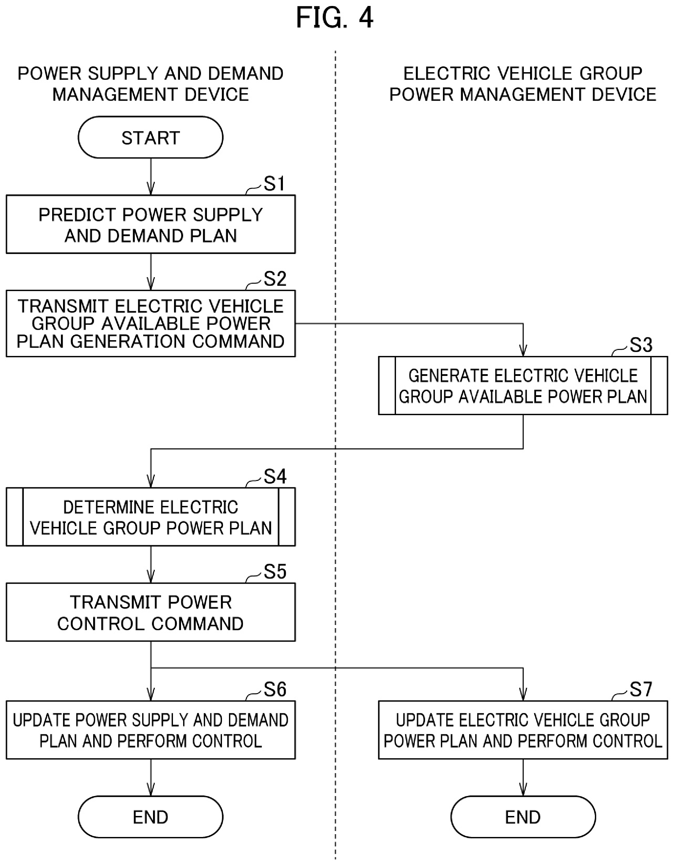

The outline of each function and operation of the power supply and demand management device 20 and the electric vehicle group power management device 30 will be described with reference to FIG. 4. First, in step S1, the power supply and demand predicting unit 21 of the power supply and demand management device 20 predicts a power supply and demand plan indicating a transition of power supply and demand of the entire power supply and demand system 1. The power supply and demand predicting unit 21, for example, stores past information on power consumption excluding an electric vehicle group from the entire power supply and demand system 1, and predicts power demand by using power demand excluding the electric vehicle group from the entire power supply and demand system 1, which is calculated using the power meter 10 and the like, the stored power consumption, and the day of the week. Weather forecast information is acquired from a weather forecast system (not illustrated), and power to be supplied by the renewable energy power generation facility 80 is predicted by using the weather forecast information. The power supply and demand prediction unit 21 predicts a product obtained by subtracting supply power from demand power as a power supply and demand plan. Note that for the controllable load 70, the non-renewable energy power generation facility 90, and the storage battery 100, a power supply and demand plan may be predicted on the assumption that control is performed, or a power supply and demand plan may be predicted on the assumption that control is not performed, but it is desirable that a power supply and demand plan be predicted on the assumption that control is performed in consideration of economic efficiency.

Furthermore, instead of the power supply and demand management device 20, the electric vehicle group power management device 30 may perform prediction of a power supply and demand plan. Here, the electric vehicle group power management device 30 performs prediction of a power supply and demand plan, based on an electric vehicle group power plan transmitted from the power supply and demand management device 20, described below.

The process proceeds to step S2, and the communication unit 23 transmits the predicted power supply and demand plan for the entire power supply and demand system 1 to the electric vehicle group power management device 30 as power supply and demand plan information. Further, the communication unit 23 transmits to the electric vehicle group power management device 30 an electric vehicle group available power plan generation command instructing it to generate an electric vehicle group available power plan, based on the power supply and demand plan information.

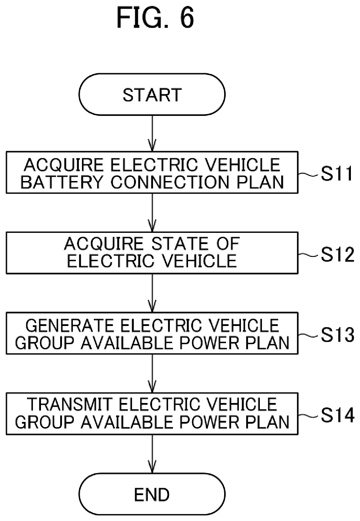

The process proceeds to step S3, and the communication unit 35 of the electric vehicle group power management device 30 receives the power supply and demand plan information, and the electric vehicle group available power plan generation command from the power supply and demand management device 20. The electric vehicle group available power plan generating unit 36 generates an electric vehicle group available power plan where the electric vehicle charger 40 charges and discharges the electric vehicle battery 50, based on the power supply and demand plan information, performance of the electric vehicle charger 40, the state of the electric vehicle battery 50, and an electric vehicle battery connection plan. Note that the electric vehicle group available power plan may be generated based on at least the state of the electric vehicle battery 50. The generation method of the electric vehicle group available power plan will be described below with reference to FIGS. 6 to 8. The communication unit 35 of the electric vehicle group power management device 30 transmits the generated electric vehicle group available power plan to the power supply and demand management device 20.

Note that the state of the electric vehicle battery 50 is acquired, for example, from the charge and discharge state storage unit 34. The monitoring and control unit 33 is connected to at least one or more electric vehicle chargers 40. For example, in FIG. 3, the monitoring and control unit 33 is connected to two electric vehicle chargers 40a and 40b. In FIG. 3, the monitoring and control unit 33 acquires the state of each electric vehicle battery 50 connected to the electric vehicle chargers 40a and 40b, and stores them in the charge and discharge state storage unit 34. The state of the electric vehicle battery 50 includes information such as a battery capacity, a discharge limit remaining amount, and a storage amount of each electric vehicle battery 50 connected to the electric vehicle chargers 40a and 40b.

An electric vehicle battery connection utilization plan is generated by the electric vehicle battery connection plan generating unit 32. The electric vehicle battery connection plan generating unit 32 generates an electric vehicle battery connection plan, based on information acquired from, for example, a charge reservation system (not illustrated). The electric vehicle battery connection plan includes information such as the battery capacity of the electric vehicle battery 50 connected to the power supply and demand system 1, the date and time when the electric vehicle battery 50 is connected to the power supply and demand system 1, the date and time when the electric vehicle battery 50 is disconnected from the power supply and demand system 1, the storage amount at the date and time when the electric vehicle battery 50 is connected, and the required storage amount at the date and time when the electric vehicle battery 50 is disconnected. Note that the electric vehicle battery connection utilization plan may be predicted based on past data.

The process proceeds to step S4, and the communication unit 23 of the power supply and demand management device 20 receives the electric vehicle group available power plan from the electric vehicle group power management device 30.

The electric vehicle group power plan determining unit 25 corrects the electric vehicle group available power plan based on at least an economic index, and determines the corrected electric vehicle group available power plan as the electric vehicle group power plan.

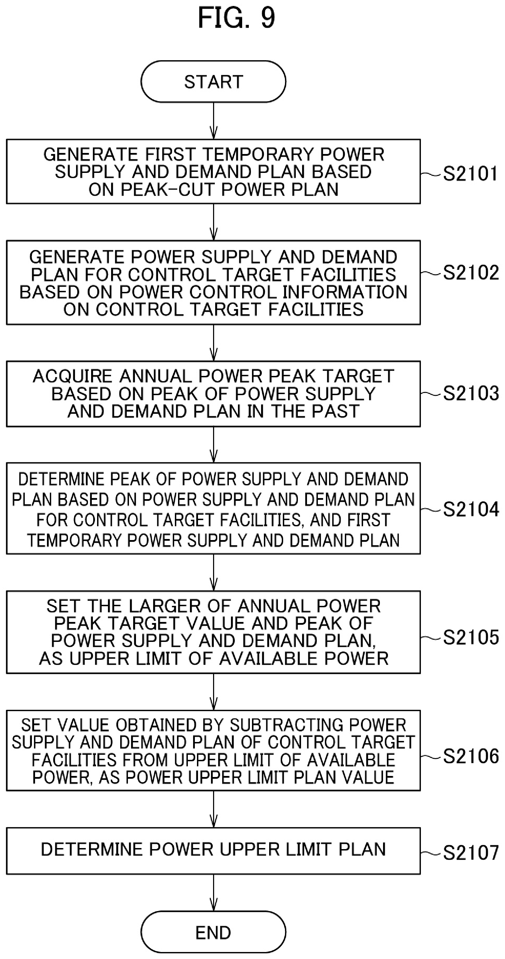

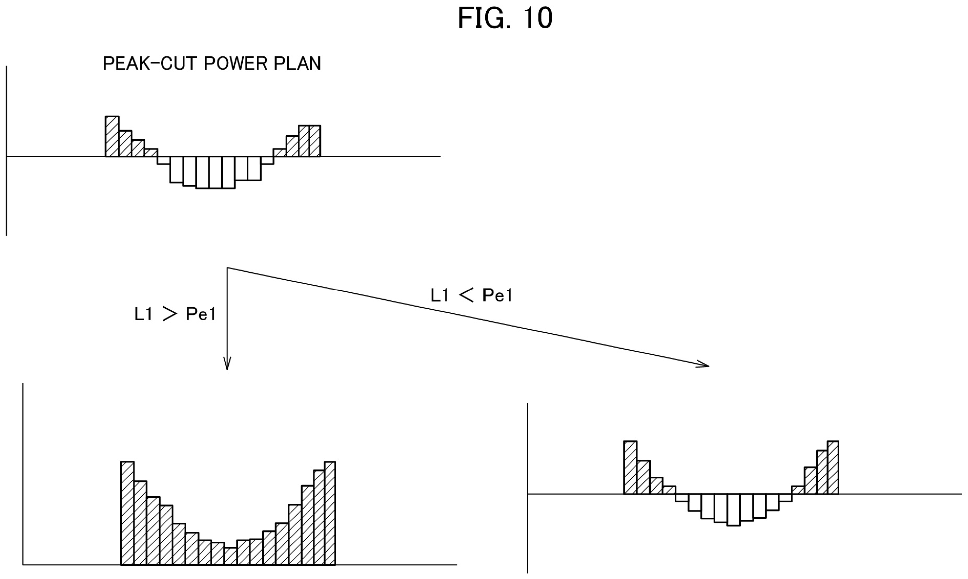

Note that the correction of the electric vehicle group available power plan may use power control information of the controllable load 70, power control information of the non-renewable energy power generation facility 90, and power information of the storage battery 100. A method of correcting an electric vehicle group available power plan will be described below with reference to FIGS. 9 and 10.

The electric vehicle group power plan includes at least a power upper limit plan value of the electric vehicle charger 40, that is, a power upper limit plan which is a transition of an upper limit value of power available for charging and discharging the electric vehicle battery 50 for each time period. The electric vehicle group power plan may also include a power lower limit plan value of the electric vehicle charger 40, that is, a power lower limit plan which is a transition of a lower limit value of power available for charging and discharging the electric vehicle battery 50 for each time period. Note that the power lower limit plan may be omitted. For example, when the electric vehicle charger 40 can only be charged and cannot be discharged, the power lower limit plan is regarded as 0 kW, and when the electric vehicle charger 40 can be discharged, the power lower limit plan is not set.

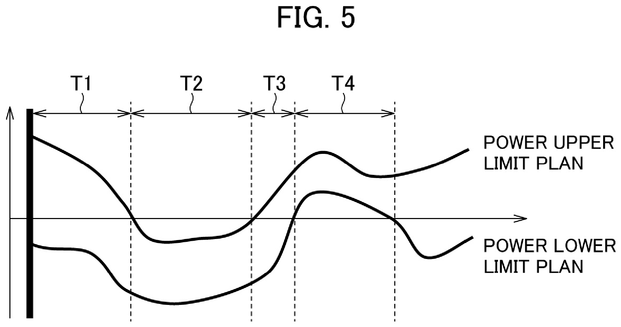

FIG. 5 illustrates an example of a power upper limit plan and a power lower limit plan set by the power supply and demand management device 20. In FIG. 5, the horizontal axis represents time, and the vertical axis represents power amount. In FIG. 5, periods T1 and T3 where the power upper limit plan value becomes positive and the power lower limit plan value becomes negative are periods where the electric vehicle charger 40 may charge power to the electric vehicle battery 50, and discharge power stored in the electric vehicle battery 50. In addition, for example, a period T2 where the power upper limit plan value becomes negative is a period where the electric vehicle charger 40 must discharge power from the electric vehicle battery 50. Furthermore, for example, a period T4 where the power lower limit plan value becomes positive is a period where the electric vehicle charger 40 must charge power to the electric vehicle battery 50. In the first embodiment, a case where the power upper limit plan is included in the electric vehicle group power plan will be described.

The process proceeds to step S5, and the communication unit 23 transmits the electric vehicle group power plan to the electric vehicle group power management device 30. Furthermore, the communication unit 23 transmits a power control command instructing to charge and discharge the electric vehicle battery 50, based on the electric vehicle group power plan, to the electric vehicle group power management device 30. Then, the process proceeds to steps S6 and S7.

In step S6, the power supply and demand plan generating unit 24 updates the power supply and demand plan for the entire power supply and demand system 1 in consideration of the determined electric vehicle group power plan. The monitoring and control unit 22 controls the controllable load 70, the non-renewable energy power generation facility 90, and the storage battery 100, based on the updated power supply and demand plan, and the process of FIG. 4 ends.

In step S7, the communication unit 35 of the electric vehicle group power management device 30 receives the electric vehicle group power plan and the power control command from the power supply and demand management device 20. The electric vehicle group power plan generating unit 31 updates the electric vehicle group power plan, based on the received electric vehicle group power plan, the state of the electric vehicle battery 50, and the electric vehicle battery connection plan. The monitoring and control unit 33 controls the electric vehicle charger 40, based on the updated electric vehicle group power plan, and charges and discharges the electric vehicle battery 50 connected to the electric vehicle charger 40. Thereafter, the process of FIG. 4 ends.

[Process for generating electric vehicle group available power plan]Next, an example of a process for generating an electric vehicle group available power plan in step S3 of FIG. 4 will be described with reference to FIGS. 6 to 8.

In step S11 of FIG. 6, the electric vehicle group available power plan generating unit 36 of the electric vehicle group power management device 30 acquires the electric vehicle battery connection plan from the electric vehicle battery connection plan generating unit 32.

The process proceeds to step S12, and the monitoring and control unit 33 acquires the state of the electric vehicle charger 40, and the state of the electric vehicle battery 50 currently connected to the electric vehicle charger 40. The monitoring and control unit 33 stores the acquired state of the electric vehicle battery 50 in the charge and discharge state storage unit 34.

The process proceeds to step S13, and the electric vehicle group available power plan generating unit 36 generates an electric vehicle group available power plan which is a charging and discharging plan where the electric vehicle charger 40 charges and discharges the electric vehicle battery 50, based on information such as the power supply and demand plan information, the electric vehicle battery connection plan, and the state of the electric vehicle battery 50. Specifically, the electric vehicle group available power plan generating unit 36 generates an electric vehicle group available power plan including a peak-cut power plan which is a charging and discharging plan for the electric vehicle battery 50 such that the peak of the power supply and demand plan for the entire power supply and demand system 1 is suppressed.

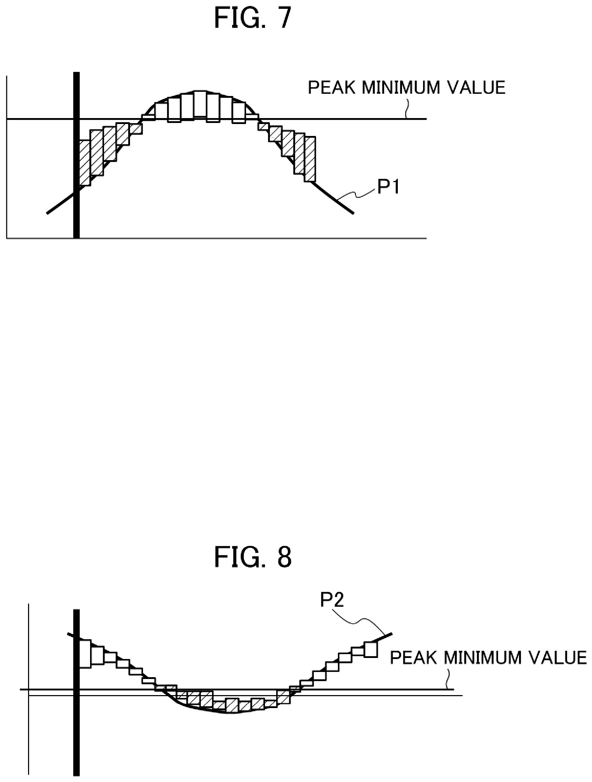

A first example of the peak-cut power plan will be described with reference to FIG. 7. In FIG. 7, the horizontal axis represents time, and the vertical axis represents power amount. FIG. 7 illustrates an example peak-cut power plan with respect to a power supply and demand plan P1 of the entire power supply and demand system 1, where peak power demand occurs during the daytime. Here, the peak power demand means a state where the value of the power supply and demand plan P1 is maximum and power demand of the entire power supply and demand system 1 is high.

With respect to the power supply and demand plan P1 of the entire power supply and demand system 1, the electric vehicle group available power plan generating unit 36 generates a peak-cut power plan such that the peak of power demand is suppressed by stopping charging the electric vehicle battery 50 and discharging power from the electric vehicle battery 50 during the daytime when power demand is high, as illustrated in FIG. 7, while satisfying a charging demand from an electric vehicle, such as a demand storage amount at a date and time for disconnecting. This peak-cut plan is preferably one that minimizes peak power. In addition, among those with the smallest peak power, it is desirable that a value obtained by subtracting the charging power amount from the discharging power amount be larger. Furthermore, a plan with a smaller deviation from the peak power is desirable. Here, the deviation is, for example, a value evaluated using equation (1) below.

[Mathematical formula 1]

$$\int t \{P_{peak} - P(t)\}^2 \, dt \qquad (1)$$

Next, a second example of the peak-cut power plan will be described with reference to FIG. 8. In FIG. 8, the horizontal axis represents time, and the vertical axis represents power demand. FIG. 8 illustrates an example peak-cut power plan with respect to a power supply and demand plan P2 of the entire power supply and demand system 1, where surplus power is generated during the daytime.

With respect to the power supply and demand plan P2 of the entire power supply and demand system 1, the electric vehicle group available power plan generating unit 36 generates a peak-cut power plan such that the peak of power supply and demand is suppressed by discharging the electric vehicle battery 50 in the morning and evening when surplus power is not generated, as illustrated in FIG. 8.

That is, the electric vehicle group available power plan generating unit 36 generates a peak-cut power plan where fluctuation of power supply and demand of the entire power supply and demand system 1 is reduced.

The process proceeds to step 14 of FIG. 6, the communication unit 35 transmits the electric vehicle group available power plan including the peak-cut power plan to the power supply and demand management device 20, and the process of FIG. 6 ends. Thereafter, the process proceeds to step S4 of FIG. 4.

[Process for correcting electric vehicle group available power plan]

Next, a process for correcting the electric vehicle group available power plan in step S4 of FIG. 4 will be described with reference to FIGS. 9 and 10.

Based on the peak-cut power plan included in the electric vehicle group available power plan acquired from the electric vehicle group power management device 30, the power supply and demand management device 20 generates a power upper limit plan which is a transition of the upper limit value available for charging and discharging the electric vehicle battery 50 in each time period. A process for generating the power upper limit plan will be described with reference to FIGS. 9 and 10.

First, in step S2101 of FIG. 9, the power supply and demand plan generating unit 24 of the power supply and demand management device 20 generates a first temporary power supply and demand plan for the entire power supply and demand system 1, based on the peak-cut power plan acquired from the electric vehicle group power management device 30. The power supply and demand plan generating unit 24 generates a first temporary power supply and demand plan for the entire power supply and demand system 1 by, for example, adding or subtracting the amount of charging / discharging power in the case of charging or discharging the electric vehicle battery 50, based on the peak-cut power plan, to or from the power supply and demand plan for the entire power supply and demand system 1 predicted in step S1 of FIG. 4. The power supply and demand plan generating unit 24 generates a first temporary power supply and demand plan for the entire power supply and demand system 1, for example, by adding the amount of charge power in the case of charging the electric vehicle battery 50, based on the peak-cut power plan, to the power supply and demand plan for the entire power supply and demand system 1, or by subtracting the amount of discharge power in the case of discharging the electric vehicle battery 50, based on the peak-cut power plan, from the power supply and demand plan for the entire power supply and demand system 1.

The process proceeds to step S2102, and the power supply and demand plan generating unit 24 acquires current power control information of control target facilities, such as the controllable load 70, the non-regenerative energy power generation facility 90, and the storage battery 100, from the monitoring and control unit 22. The monitoring and control unit 22 is connected to the controllable load 70, the renewable energy power generation facility 80, the non-renewable energy power generation facility 90, and the storage battery 100, for example, as illustrated in FIG. 2. The monitoring and control unit 22 acquires information indicating power supplied to the controllable load 70 and the storage battery 100, and power supplied (discharged) from the renewable energy power generation facility 80, the non-renewable energy power generation facility 90, and the storage battery 100, as power control information of the control target facilities. The power supply and demand plan generating unit 24 generates a power supply and demand plan for control target facilities, based on current power control information of the control target facilities, such as the controllable load 70, the renewable energy power generation facility 80, the non-regenerative energy power generation facility 90, and the storage battery 100.

The process proceeds to step S2103, and the electric vehicle group power plan determining unit 25 acquires information indicating an annual power peak target value L1 based on the peak of power supply and demand plans in the past, from the power system monitoring and control system 2 or an external device (not illustrated).

The process proceeds to step S2104, and the power supply and demand plan generating unit 24 generates a power supply and demand plan for the entire power supply and demand system 1, based on the power supply and demand plan for control target facilities and the first temporary power supply and demand plan. The electric vehicle group power plan determining unit 25 determines a peak Pe1 of the power supply and demand plan for the entire power supply and demand system 1, based on the determined power supply and demand plan for the entire power supply and demand system 1.

The process proceeds to step S2105, and the electric vehicle group power plan determining unit 25 sets the larger of the annual power peak target value L1, and the peak Pe1 of the power supply and demand plan for the entire power supply and demand system 1, as an upper limit of available power.

The process proceeds to step S2106, and the electric vehicle group power plan determining unit 25 sets a value obtained by subtracting a value of the power supply and demand plan for control target facilities for each time period from the upper limit of available power, as an upper limit value of available power for charging and discharging the electric vehicle battery 50 (power upper limit plan value) for each time period. Note that the power supply and demand plan for the facilities other than the electric vehicle battery 50 need not be the plan generated in step S2104, and may be generated again from the upper limit of available power.

FIG. 10 illustrates an example of a power upper limit plan generated by the power supply and demand management device 20. In FIG. 10, the horizontal axis represents time, and the vertical axis represents the amount of charging / discharging power to be charged from or discharged to the electric vehicle battery 50 for each time period. In FIG. 10, when the charging / discharging power is positive, the electric vehicle battery 50 is charged, and when the amount of charging / discharging power is negative, the electric vehicle battery 50 is discharged.

The upper left diagram in FIG. 10 illustrates a peak-cut power plan acquired from the electric vehicle group power management device 30. The peak-cut power plan of the upper left diagram in FIG. 10 illustrates that the electric vehicle battery 50 is charged in the morning and evening, and discharged during the day.

When the annual power peak target value L1 is larger than the peak Pe1 of the power supply and demand plan for the entire power supply and demand system 1, the annual power peak target value L1 is set as the upper limit of available power. In this case, the electric vehicle group power plan determining unit 25 sets a value obtained by subtracting the power supply and demand plan for the control target facilities from the annual power peak target value L1, as the power upper limit plan value.

For example, in the lower left diagram in FIG. 10, when the power upper limit plan value obtained by subtracting the power supply and demand plan for control target facilities from the annual power peak target value L1 is positive in all time periods, an electric vehicle charging plan such that the electric vehicle battery 50 is charged in all time periods can be generated.

When the annual power peak target value L1 is equal to or less than the peak Pe1 of the power supply and demand plan for the entire power supply and demand system 1, the peak Pe1 of the power supply and demand plan for the entire power supply and demand system 1 is set as the upper limit of available power. In this case, the electric vehicle group power plan determining unit 25 sets a value obtained by subtracting the power supply and demand plan for control target facilities from the peak Pe1 of the power supply and demand plan for the entire power supply and demand system 1, as the power upper limit plan value.

For example, in the lower-right diagram of FIG. 10, it is possible to generate an electric vehicle charging plan such that the electric vehicle battery 50 is charged in a time period where the value obtained by subtracting the power supply and demand plan for control target facilities from the peak Pe1 of the power supply and demand plan for the entire power supply and demand system 1 is positive, and the electric vehicle battery 50 is discharged in a time period where the value obtained by subtracting the power supply and demand plan for control target facilities from the peak Pe1 of the power supply and demand plan for the entire power supply and demand system 1 is negative.

The process proceeds to step S2107, and the electric vehicle group power plan determining unit 25 determines a power upper limit plan which is a transition of the power upper limit plan value, based on the power upper limit plan value in each time period. This power upper limit plan corresponds to the corrected electric vehicle group available power plan. The electric vehicle group power plan determining unit 25 transmits the power upper limit plan to the electric vehicle group power management device 30 as an electric vehicle group power plan. Note that the electric vehicle group power plan determining unit 25 may transmit a unit power rate which is an electric rate per unit amount of power, to the electric vehicle group power management device 30, in accordance with the electric vehicle group power plan. Thereafter, the electric vehicle group power plan determining unit 25 ends the process of FIG. 9.

[Action and effect of first embodiment]

As described above, the power supply and demand system 1 according to the first embodiment includes the power supply and demand management device 20, which manages power supply and demand of the entire power supply and demand system 1, and the electric vehicle group power management device 30, which manages power charged and discharged by the electric vehicle charger 40 (charging and discharging device) to one or more electric vehicle batteries 50 (batteries of the electric vehicle group). The electric vehicle group power management device 30 generates an electric vehicle group available power plan including at least a peak-cut power plan which is a charging and discharging plan for the electric vehicle batteries 50 such that the peak of a power supply and demand plan which predicts a transition of power supply and demand of the entire power supply and demand system 1 is suppressed, in consideration of the state of the electric vehicle batteries 50. The electric vehicle group power management device 30 outputs the electric vehicle group available power plan to the power supply and demand management device 20. The power supply and demand management device 20 acquires the electric vehicle group available power plan from the electric vehicle group power management device 30, and corrects the electric vehicle group available power plan, based on the power control information on a facility whose power demand is controllable at least in the power supply and demand system 1. The power supply and demand management device 20 outputs the corrected electric vehicle group available power plan to the electric vehicle group power management device 30 as the electric vehicle group power plan. The electric vehicle group power management device 30 acquires the electric vehicle group power plan from the power supply and demand management device 20, and manages power charged and discharged by the electric vehicle charger 40 to the electric vehicle batteries 50, based on the electric vehicle group power plan.

In the power supply and demand system 1 according to the first embodiment, the power supply and demand management device 20, which manages power supply and demand of the entire power supply and demand system 1, can be separated from the electric vehicle group power management device 30, which manages power to be charged and discharged to the electric vehicle batteries 50 connected to the electric vehicle charger 40. In a case of corresponding to communication with the electric vehicle battery 50 of a new model, the electric vehicle group power management device 30 only needs to implement communication with an electric vehicle of a new model, so that the effort required to correspond to various electric vehicle batteries 50 can be reduced.

In the power supply and demand system 1 according to the first embodiment, the peak-cut power plan for the electric vehicle batteries 50, in consideration of the power supply and demand plan for the power supply and demand system 1 side, is transmitted from the electric vehicle group power management device 30 to the power supply and demand management device 20. Then, the power supply and demand management device 20 can correct the peak-cut power plan for the electric vehicle batteries 50, based on at least the power control information on a facility in the power supply and demand system 1, and output the power upper limit plan, which is the corrected peak-cut power plan, to the electric vehicle group power management device 30. Thus, an electric vehicle group power plan for the electric vehicle batteries 50 in consideration of power supply and demand of the entire power supply and demand system 1 can be generated while controlling the number of communications. The electric vehicle charger 40 can be controlled in consideration of power supply and demand in the power supply and demand system 1 and the state of the electric vehicle batteries 50.

In the power supply and demand system 1 according to the first embodiment, in a peak-cut power plan, by generating a plan where the difference between the discharge power amount and the charge power amount is large, and a plan where the difference is made small, it is possible to reduce peak power in consideration of a controllable load, a non-regenerative energy power generation facility, and a storage battery. By transmitting the unit power rate, which is an electric rate per unit amount of power, in accordance with an electric vehicle group power plan, the electric vehicle group power management device 30 can perform charging based on the unit power amount price.

[Second embodiment]

Next, a second embodiment of the present invention will be described. In the second embodiment, in step S13 of FIG. 6, in addition to a peak-cut power plan, based on information such as power supply and demand plan information, an electric vehicle battery connection plan, and the state of the electric vehicle battery 50, the electric vehicle group available power plan generating unit 36 generates an electric vehicle group available power plan including a bottom-up power plan which is a charging and discharging plan for the electric vehicle battery 50 such that the bottom of the power supply and demand plan for the entire power supply and demand system 1 increases.

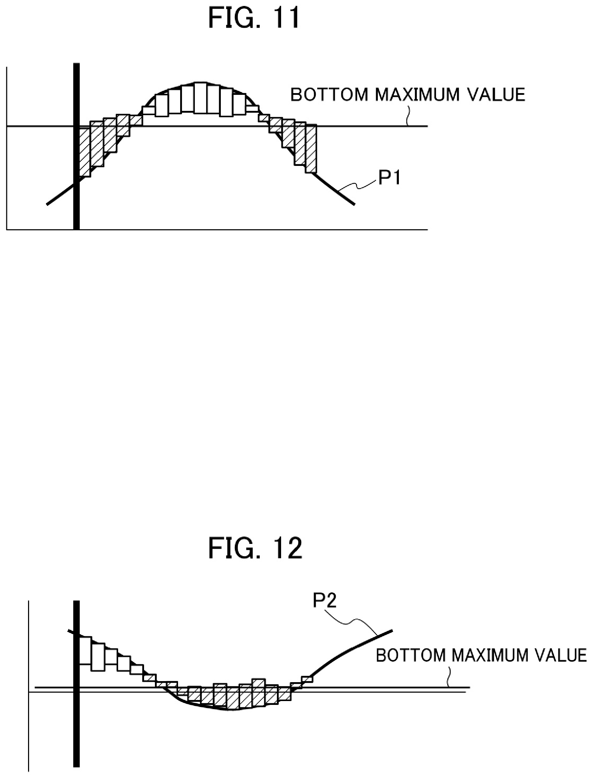

A first example of the bottom-up power plan will be described with reference to FIG. 11. In FIG. 11, the horizontal axis represents time, and the vertical axis represents power amount. FIG. 11 illustrates an example of the bottom-up power plan for the power supply and demand plan P1 of the entire power supply and demand system 1 such that the peak of power demand occurs during the day.

The electric vehicle group available power plan generating unit 36 generates a bottom-up power plan such that the bottom of power demand increases by charging the electric vehicle battery 50 in the morning and evening when power demand is low, as illustrated in FIG. 11, for the power supply and demand plan P1 of the entire power supply and demand system 1. The bottom of the power demand means a state where the value of the power supply and demand plan P1 becomes minimum and power demand of the entire power supply and demand system 1 is low. In this bottom-up plan, it is desirable that the bottom power become the largest when power supply and demand is not negative. In addition, when the bottom power becomes the largest, it is desirable that the storage amount at the time of disengagement of the electric vehicle battery 50 be the largest. Furthermore, a plan which has a small deviation from the bottom power is desirable. Here, the deviation is a value evaluated by equation (2) below, for example.
[Mathematical formula 2]

$$\int t\{P_{bottom} - P(t)\}^2 \, dt \qquad (2)$$

Next, a second example of the bottom-up power plan will be described with reference to Fig. 12. In Fig. 12, the horizontal axis represents time, and the vertical axis represents power demand. Fig. 12 illustrates an example of the bottom-up power plan for the power supply and demand plan P2 of the entire power supply and demand system 1, where surplus power is generated during the daytime.

With respect to the power supply and demand plan P2 of the entire power supply and demand system 1, the electric vehicle group available power plan generating unit 36 generates a bottom-up power plan such that the bottom of the power supply and demand plan increases by charging the electric vehicle battery 50 during the day when surplus power is generated, as illustrated in FIG. 12.

That is, the electric vehicle group available power plan generating unit 36 generates a bottom-up power plan such that fluctuations in power supply and demand of the entire power supply and demand system 1 become small.

In the second embodiment, in step S14 of FIG. 5, the communication unit 35 transmits the electric vehicle group available power plan including the peak-cut power plan and the bottom-up power plan to the power supply and demand management device 20 in a state where the peak-cut power plan and the bottom-up power plan can be distinguished, and ends the process of FIG. 5. Thereafter, the process proceeds to step S4 of FIG. 4.

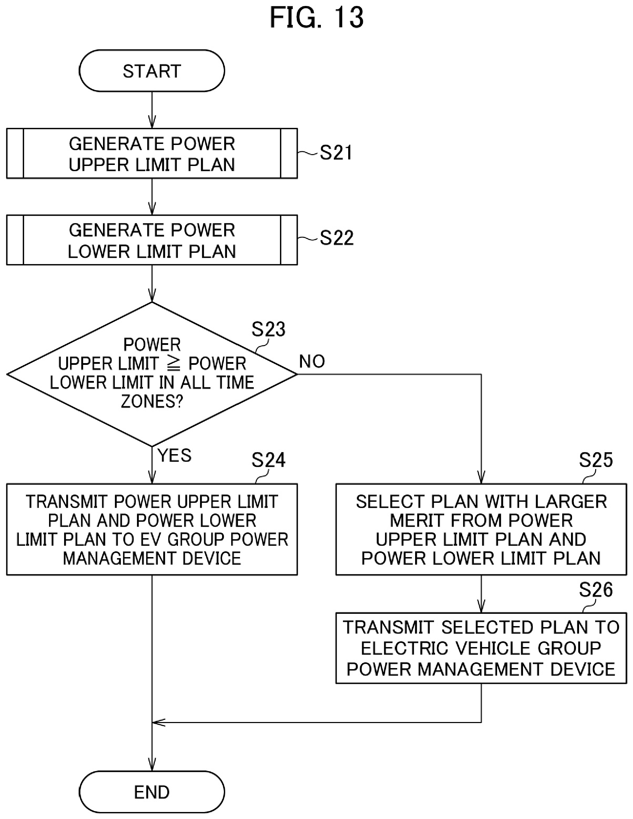

Next, the process for correcting the electric vehicle group available power plan in step S4 of FIG. 4 in the second embodiment will be described with reference to FIG. 13. In step S21 of FIG. 13, the power supply and demand management device 20 generates a power upper limit plan which is a transition of the upper limit value available for charging and discharging the electric vehicle battery 50 mounted on an EV50 in each time period, based on the peak-cut power plan included in the electric vehicle group available power plan acquired from the electric vehicle group power management device 30. The process for generating the power upper limit plan is similar to the process illustrated in FIG. 9 of the first embodiment, and thus a description thereof will be omitted.

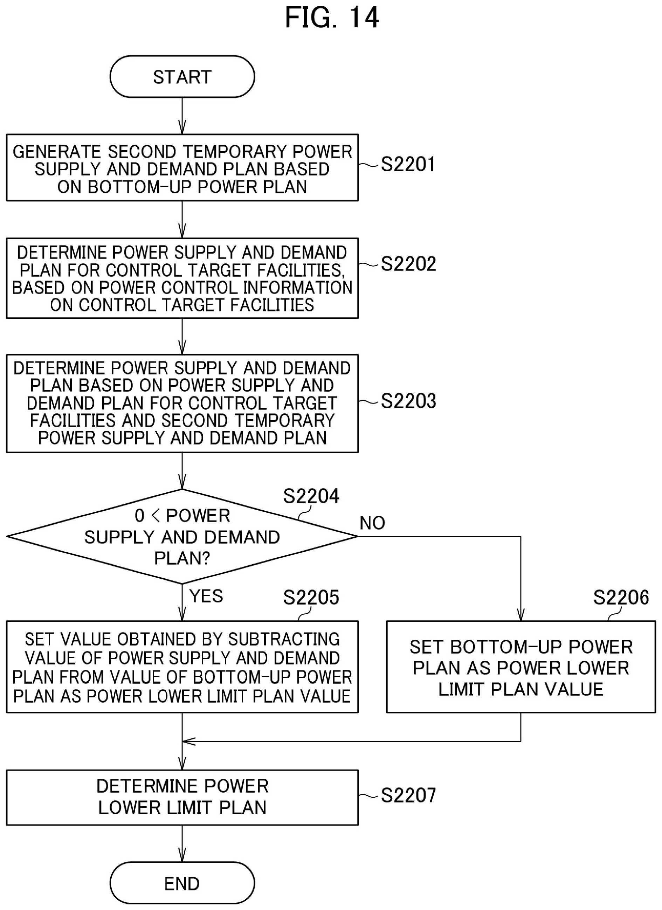

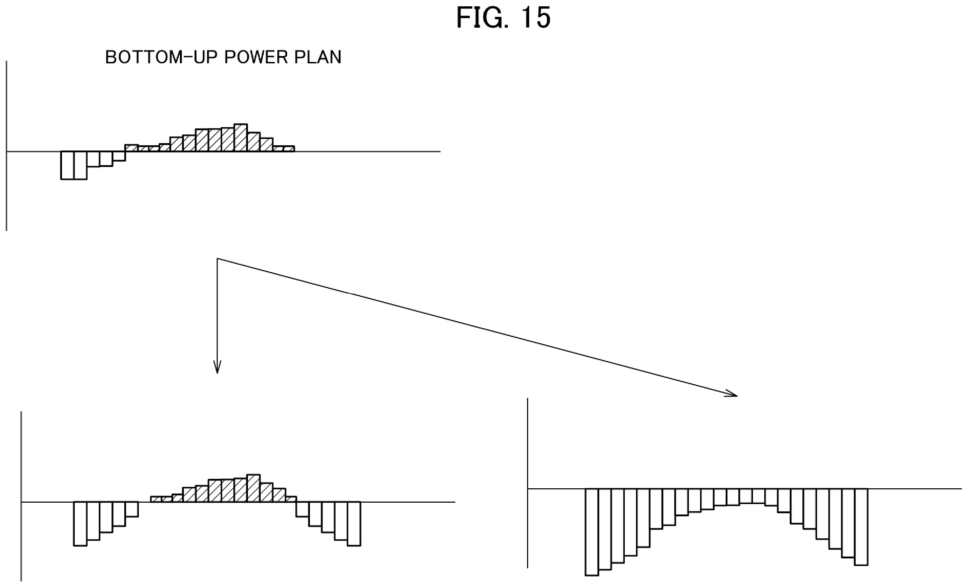

The process proceeds to step S22, and the power supply and demand management device 20 generates a power lower limit plan which is a transition of the lower limit value of the power amount available for charging and discharging the electric vehicle battery 50 by the electric vehicle charger 40, based on the bottom-up power plan included in the electric vehicle group available power plan acquired from the electric vehicle group power management device 30. The process for generating the power lower limit plan will be described with reference to FIGS. 14 and 15.

First, in step S2201 of FIG. 14, the power supply and demand plan generating unit 24 generates a second temporary power supply and demand plan for the entire power supply and demand system 1, based on the bottom-up power plan acquired from the electric vehicle group power management device 30. The power supply and demand plan generating unit 24 generates the second temporary power supply and demand plan for the entire power supply and demand system 1 by, for example, adding or subtracting the amount of charging / discharging power when the electric vehicle battery 50 is charged and discharged based on the bottom-up power plan, to the power supply and demand plan for the entire power supply and demand system 1 predicted in step S1 of FIG. 4. The power supply and demand plan generating unit 24 generates the second temporary power supply and demand plan for the entire power supply and demand system 1 by, for example, adding the amount of charging power when the electric vehicle battery 50 is charged based on the bottom-up power plan, to the power supply and demand plan for the entire power supply and demand system 1, and subtracting the amount of discharging power when the electric vehicle battery 50 is discharged based on the bottom-up power plan, from the power supply and demand plan for the entire power supply and demand system 1.

The process proceeds to step S2202, and the power supply and demand plan generating unit 24 acquires power control information on control target facilities such as the current controllable load 70, the regenerative energy power generation facility 80, the non-renewable energy power generation facility 90, and the storage battery 100, from the monitoring and control unit 22. The power supply and demand plan generating unit 24 generates a power supply and demand plan for control target facilities, based on the current power control information on the control target facilities such as the controllable load 70, the renewable energy power generation facility 80, the non-regenerative energy power generation facility 90, and the storage battery 100.

The process proceeds to step S2203, and the power supply and demand plan generating unit 24 generates a power supply and demand plan for the entire power supply and demand system 1, based on the power supply and demand plan for control target facilities, and the second temporary power supply and demand plan.

The process proceeds to step S2204, and the electric vehicle group power plan determining unit 25 determines whether the value of the power supply and demand plan for the entire power supply and demand system 1 for each time period is greater than zero. When the value of the power supply and demand plan for the entire power supply and demand system 1 is greater than zero (YES in step S2204), the process proceeds to step S2205, and the electric vehicle group power plan determining unit 25 sets a value obtained by subtracting the value of the power supply and demand plan for the entire power supply and demand system 1 from the value of the bottom-up power plan, as a lower limit value of power available for charging and discharging the electric vehicle battery 50 (power lower limit plan value).

In contrast, when the value of the power supply and demand plan for the entire power supply and demand system 1 is zero or less (NO in step S2204), the process proceeds to step S2206, and the electric vehicle group power plan determining unit 25 sets the value of the bottom-up power plan as the power lower limit plan value.

FIG. 15 illustrates an example of the power lower limit plan generated by the power supply and demand management device. In FIG. 15, the horizontal axis represents time, and the vertical axis represents the amount of charging / discharging power to be charged to and discharged from the electric vehicle battery 50 for each time period. In FIG. 15, when the charging / discharging power is positive, the electric vehicle battery 50 is charged, and when the amount of charging / discharging power is negative, the electric vehicle battery 50 is discharged.

The upper left diagram in FIG. 15 illustrates a bottom-up power plan acquired from the electric vehicle group power management device 30. The bottom-up power plan of the upper left diagram in FIG. 15 illustrates that the electric vehicle battery 50 is discharged in the morning, and charged during the day.

When the value of the power supply and demand plan for the entire power supply and demand system 1 is greater than zero, the electric vehicle group power plan determining unit 25 sets a value obtained by subtracting the value of the power supply and demand plan for the entire power supply and demand system 1 from the value of the bottom-up power plan, as the power lower limit plan value. When the value of the power supply and demand plan for the entire power supply and demand system 1 is zero or less, the electric vehicle group power plan determining unit 25 sets the value of the bottom-up power plan as the power lower limit plan value.

For example, in the lower left diagram in FIG. 15, an electric vehicle charging plan can be generated where the electric vehicle battery 50 is discharged in a time period where the power lower limit plan value is negative, and the electric vehicle battery 50 is charged in a time period where the power lower limit plan value is positive. For example, in the lower right diagram of FIG. 15, an electric vehicle charging plan can be generated where the electric vehicle battery 50 is discharged in all time periods when the power lower limit plan values are negative in all time periods.

The process proceeds to step S2207, and the electric vehicle group power plan determining unit 25 determines a power lower limit plan, which is a transition of power lower limit plan values, based on the power lower limit plan value in each time period. Thereafter, the electric vehicle group power plan determining unit 25 ends the process of FIG. 14, and the process proceeds to step S23 of FIG. 13.

In step S23 of FIG. 13, the electric vehicle group power plan determining unit 25 determines whether the value of the power upper limit plan is equal to or greater than the value of the power lower limit plan in all time periods. When the value of the power upper limit plan is equal to or greater than the value of the power lower limit plan in all time periods (YES in step S23), the process proceeds to step S24. In step S24, the electric vehicle group power plan determining unit 25 transmits the power upper limit plan and the power lower limit plan as an electric vehicle group power plan to the electric vehicle group power management device 30. Thereafter, the electric vehicle group power plan determining unit 25 ends the process of FIG. 13.

In contrast, when the value of the power upper limit plan is not equal to or greater than the value of the power lower limit plan in any time period (NO in step S23), the process proceeds to step S25. In step S25, the electric vehicle group power plan determining unit 25 calculates respective merits of the power upper limit plan and the power lower limit plan. For example, the electric vehicle group power plan determining unit 25 calculates a revenue amount when the power upper limit plan is adopted, and a revenue amount when the power lower limit plan is adopted, as merits of the power upper limit plan and the power lower limit plan, respectively.

The electric vehicle group power plan determining unit 25 calculates a revenue amount when the power upper limit plan is adopted, based on, for example, a charge / discharge amount in each time period when charging and discharging of the electric vehicle battery 50 is controlled based on the power upper limit plan, and a unit power rate which is an electric rate per unit amount of power in each time period. The electric vehicle group power plan determining unit 25 calculates a revenue amount when the power lower limit plan is adopted, based on, for example, a charge / discharge amount in each time period when charging and discharging of the electric vehicle battery 50 is controlled based on the power lower limit plan, and a unit power rate in each time period. The electric vehicle group power plan determining unit 25 selects a plan with a larger calculated merit (revenue amount) from the power upper limit plan and the power lower limit plan.

[Action and effect of second embodiment]

As described above, in the power supply and demand system 1 for electric vehicles according to the second embodiment, the electric vehicle group power management device 30 causes the electric vehicle group available power plan to further include a bottom-up power plan such that the bottom of a power supply and demand plan increases, which is a charging and discharging plan for the electric vehicle battery 50.

According to the power supply and demand system 1 according to the second embodiment, the peak-cut power plan and the bottom-up power plan for the electric vehicle battery 50, which consider the power supply and demand plan for the power supply and demand system 1 side, are transmitted from the electric vehicle group power management device 30 to the power supply and demand management device 20. Then, the power supply and demand management device 20 can correct the peak-cut power plan and the bottom-up power plan for the electric vehicle battery 50, based on at least power control information on a facility in the power supply and demand system 1, and output at least one of the power upper limit plan or the power lower limit plan, which are the corrected peak-cut power plan and the bottom-up power plan, to the electric vehicle group power management device 30.

Thus, a power plan for the electric vehicle battery 50 which considers power supply and demand of the entire power supply and demand system 1 can be generated while the number of communications is controlled. The electric vehicle charger 40 can be controlled in consideration of power supply and demand in the power supply and demand system 1 and the state of the electric vehicle battery 50. Thus, when power of the renewable energy power generation facility 80 is not fully utilized in the power supply and demand system 1, or when power generated by the renewable energy power generation facility 80 must be suppressed, the energy can be effectively utilized by the electric vehicle battery 50.

[Third embodiment]

Next, a third embodiment of the present invention will be described. In the second embodiment described above, the electric vehicle group power management device 30 generates an electric vehicle group available power plan including a peak-cut power plan and a bottom-up power plan, and transmits it to the power supply and demand management device 20. However, in the third embodiment, in addition to a first electric vehicle group available power plan including the peak-cut power plan and the bottom-up power plan, the electric vehicle group power management device 30 generates a second electric vehicle group available power plan including a demand response power plan for charging and discharging the electric vehicle charger 40 according to a target period of a demand response in the power supply and demand plan for the entire power supply and demand system 1. Note that a process for generating a peak-cut power plan and a bottom-up power plan is the same as that in the second embodiment, and thus description thereof will be omitted. In the third embodiment, a process for generating a power upper limit plan executed by the power supply and demand management device 20 is different from the process for generating the power upper limit plan, executed by the power supply and demand management device 20 in the second embodiment (corresponding to the process illustrated in FIG. 9 in the first embodiment). In the following description, the third embodiment of the present invention will be described mainly with respect to differences from the second embodiment.

In the third embodiment, the electric vehicle group available power plan generating unit 36 of the electric vehicle group power management device 30 acquires information related to a demand response request of an electric power company from, for example, the electric power system monitoring and control system 2. The information related to the demand response request includes a target time of the demand response, and a target value of the demand response. The demand response request includes at least a target time of the demand response. The demand response request includes a request for suppressing power consumption at the target time (hereinafter, demand response request for reduction), and a request for promoting power consumption (hereinafter referred to as a demand response request for increase). Hereinafter, a method of responding to a demand response request for reduction will be mainly described.

In addition to the electric vehicle group available power plan including the peak-cut power plan and the bottom-up power plan, the electric vehicle group available power plan generating unit 36 generates a demand response power plan based on information such as power supply and demand plan information acquired from the power supply and demand management device 20, information related to a demand response request, an electric vehicle battery connection plan, and the state of electric vehicle battery 50,.

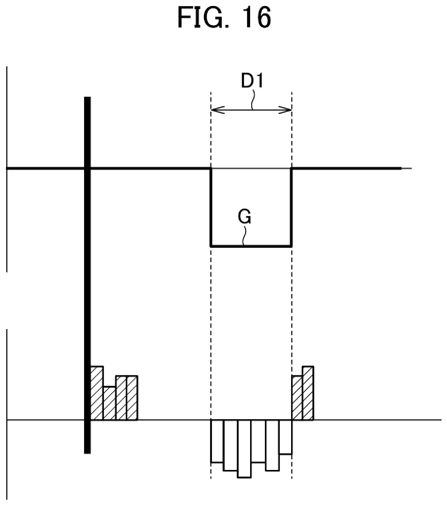

The electric vehicle group available power plan generating unit 36 acquires a demand response target time (period D1) as information related to a demand response request, for example, as illustrated in the upper diagram of FIG. 16. In this case, for example, as illustrated in the lower diagram of FIG. 16, the electric vehicle group available power plan generating unit 36 generates a demand response power plan for suppressing power supply and demand of the entire power supply and demand system 1 in the period D1. Note that in the case of a demand response request for increase, a demand response power plan for increasing the power supply and demand of the entire power supply and demand system 1 in the period D1 is generated. The electric vehicle group available power plan generating unit 36 enables identification similar to the peak-cut power plan in the case of a demand response request for reduction, and enables identification similar to the bottom-up power plan in the case of a demand response request for increase.

In the third embodiment, the power supply and demand management device 20 calculates a revenue amount when each of the peak-cut power plan and the demand response power plan is adopted, based on a contract power increase amount and a demand response revenue, and selects either one of the peak-cut power plan or the demand response power plan, based on the revenue amount. Note that in this case, when it is possible to change whether or not to participate in the demand response, it is sufficient to calculate the revenue amount of three cases where each of the peak-cut power plan and the demand response power plan is adopted in the case of participating in the demand response and the case of not participating in the demand response, and select a case with the largest revenue amount among them. The power supply and demand management device 20 corrects the selected power plan, based on at least power control information on a facility whose power demand is controllable in the power supply and demand system 1, and information indicating the target period of a demand response.

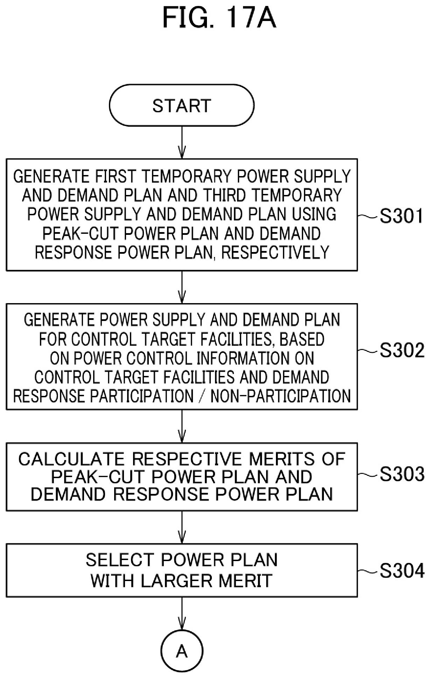

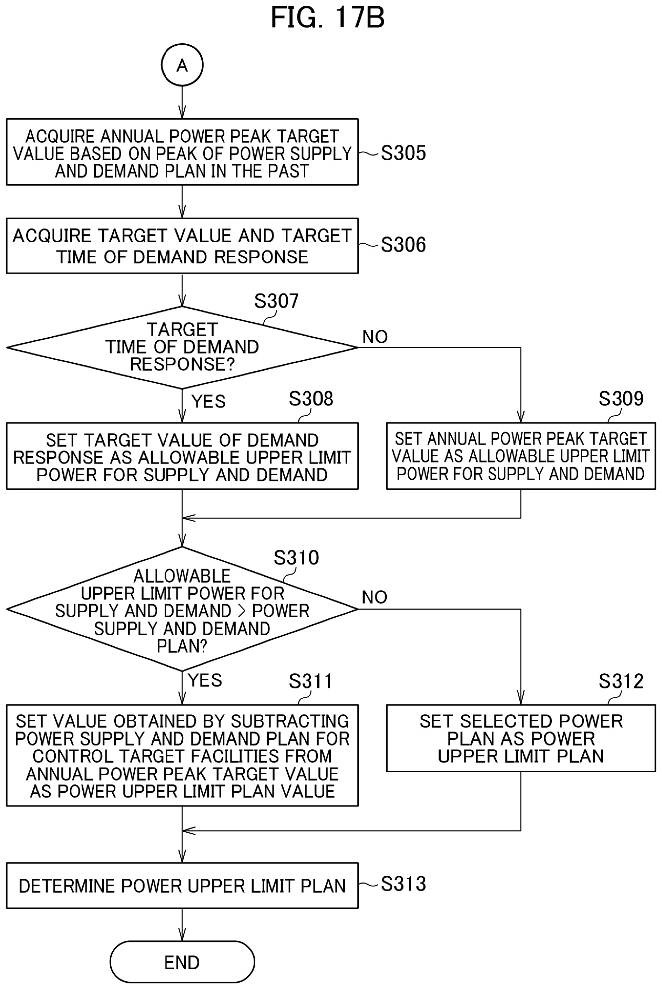

Here, a process for generating a power upper limit plan executed by the power supply and demand management device 20 in the third embodiment will be described with reference to FIGS. 17A and 17B. In the third embodiment, instead of the process of FIG. 9 in the first and second embodiments, the process of FIGS. 17A and 17B is executed.

First, in step S301 of FIG. 17A, the power supply and demand plan generating unit 24 generates a first temporary power supply and demand plan for the entire power supply and demand system 1, based on the peak-cut power plan acquired from the electric vehicle group power management device 30. A method of generating the first temporary power supply and demand plan is the same as in the first embodiment. Furthermore, the power supply and demand plan generating unit 24 generates a third temporary power supply and demand plan for the entire power supply and demand system 1, based on the demand response power plan acquired from the electric vehicle group power management device 30.

The power supply and demand plan generating unit 24 generates a third temporary power supply and demand plan for the entire power supply and demand system 1, for example, by adding or subtracting an amount of charging / discharging power when the electric vehicle battery 50 is charged and discharge based on the demand response power plan, to or from the power supply and demand plan for the entire power supply and demand system 1 predicted in step S1 of FIG. 4. The power supply and demand plan generating unit 24 generates a third temporary power supply and demand plan for the entire power supply and demand system 1, for example, by adding a charging power amount when the electric vehicle battery 50 is charged based on the demand response power plan, to the power supply and demand plan for the entire power supply and demand system 1, and subtracting a discharging power amount when the electric vehicle battery 50 is discharged based on the demand response power plan, from the power supply and demand plan for the entire power supply and demand system 1.

The process proceeds to step S302, and the power supply and demand plan generating unit 24 generates a power supply and demand plan for control target facilities, based on current power control information on control target facilities such as the controllable load 70, the regenerative energy facility 80, the non-renewable energy power generation facility 90, and the storage battery 100, and whether or not to participate in the demand response.

The process proceeds to step S303, and the power supply and demand plan generating unit 24 calculates each merit of the peak-cut power plan and the demand response power plan. For example, the power supply and demand plan generating unit 24 calculates respective revenue amounts when the peak-cut power plan is adopted, and when the demand response power plan is adopted, as respective merits of the peak-cut power plan and the demand response power plan.

The power supply and demand plan generating unit 24 calculates a revenue amount when the peak-cut power plan is adopted, based on, for example, a charge / discharge amount in each time period when charging and discharging of the electric vehicle battery 50 is controlled based on the peak-cut power plan, and a unit power rate in each time period. The power supply and demand plan generating unit 24 calculates a revenue amount when the demand response power plan is adopted, based on, for example, a charge / discharge amount in each time period when charging and discharging of the electric vehicle battery 50 is controlled based on the demand response power plan, and a unit power rate in each time period.

The process proceeds to step S304, and the electric vehicle group power plan determining unit 25 selects a plan with a larger calculated merit (revenue amount) from the peak-cut power plan and the demand response power plan.

The process proceeds to step S305 of FIG. 17B, and the electric vehicle group power plan determining unit 25 acquires information indicating an annual power peak target value, based on a peak of a power supply and demand plan in the past from the power system monitoring and control system 2 or an external device (not illustrated).

The process proceeds to step S306, and the electric vehicle group power plan determining unit 25 acquires a demand response target time, and a demand response target value from the electric vehicle group power management device 30 or an external device (not illustrated).

The process proceeds to step S307, and the electric vehicle group power plan determining unit 25 determines for each time period for which the power upper limit plan value is set, whether or not it is a target time for the demand response. When a time period for which the power upper limit plan value is set is included in the target time for the demand response (YES in step S307), the process proceeds to step S308, and the electric vehicle group power plan determining unit 25 sets the target value of the demand response as allowable upper limit power for supply and demand. Then, the process proceeds to step S310. In contrast, when the target time period for which the allowable upper limit power for supply and demand is set is not the target time of the demand response (NO in step S307), the process proceeds to step S309, and the electric vehicle group power plan determining unit 25 sets the annual power peak target value as the allowable upper limit power for supply and demand. Then, the process proceeds to step S310.

In step S310, the electric vehicle group power plan determining unit 25 determines whether the allowable upper limit power for supply and demand is larger than the power supply and demand plan for control target facilities. When the allowable upper limit power for supply and demand is larger than the value of the power supply and demand plan for control target facilities (YES in step S310), the process proceeds to step S311, and the electric vehicle group power plan determining unit 25 sets a value obtained by subtracting the value of the power supply and demand plan for control target facilities for each time period from the upper limit of available power, as the power upper limit plan value for each time period. Then, the process proceeds to step S313. In contrast, when the allowable upper limit power for supply and demand is equal to or smaller than the value of the power supply and demand plan for control target facilities (NO in step S310), the process proceeds to step S312, and the electric vehicle group power plan determining unit 25 sets the value of the power plan selected in step S304, as the power upper limit plan value for each time period. Then, the process proceeds to step S313.

In step S313, the electric vehicle group power plan determining unit 25 determines a power upper limit plan which is a transition of the power upper limit plan value, based on the power upper limit plan value for each time period. Thereafter, the electric vehicle group power plan determining unit 25 ends the process illustrated in FIG. 17B. Thereafter, the process proceeds to step S22 in FIG. 13, where the same process as in the second embodiment is executed.

[Action and effect of third embodiment]

As described above, in the power supply and demand system 1 according to the third embodiment, the electric vehicle group power management device 30 generates a first electric vehicle group available power plan including a peak-cut power plan and a bottom-up power plan, and a second electric vehicle group available power plan (demand response power plan) for charging and discharging the electric vehicle battery 50 according to a target period of a demand response in a power supply and demand plan, and outputs the first and second electric vehicle group available power plans to the power supply and demand management device 20. The power supply and demand management device 20 acquires the first and second electric vehicle group available power plans from the electric vehicle group power management device 30, and calculates a revenue amount when each of the first and second electric vehicle group available power plans is adopted, based on at least a unit power rate which is an electric rate per unit amount of power. The power supply and demand management device 20 selects either one of the first and second electric vehicle group available power plans, based on the revenue amount, and corrects the selected first or second electric vehicle group available power plan, based on at least power control information on a facility whose power demand is controllable in the power supply and demand system 1, and information indicating a target period of a demand response. The power supply and demand management device 20 outputs the corrected electric vehicle group power plan, which is the first or second electric vehicle group available power plan, to the electric vehicle group power management device 30. The electric vehicle group power management device 30 acquires the electric vehicle group power plan from the power supply and demand management device 20, and manages, based on the electric vehicle group power plan, electric power charged and discharged by the electric vehicle charger 40 to and from the electric vehicle battery 50.

According to the method of managing charging and discharging according to the third embodiment, it is possible to select a power plan with a greater merit between a peak-cut power plan for the electric vehicle battery 50, and a demand response power plan for the electric vehicle battery 50 which considers a demand response, and the selected power plan can be corrected based on at least power control information on a facility in the power supply and demand system 1, and information indicating a target period of the demand response. Thus, it is possible to generate a more optimal power plan for the electric vehicle battery 50 which considers the demand response.

Although the third embodiment describes a method of transmitting a time period for participating in a demand response, a power demand plan that is larger than power that can be charged by an electric vehicle group in a relevant time period may be transmitted from the power supply and demand management device 20 to the electric vehicle group power management device 30. When a peak-cut power plan is generated based on such a large power demand plan, it is possible to obtain an electric vehicle group available power plan equivalent to that of the first embodiment even in a target period of a demand response. When power for which the electricity price increases upon excess is determined for each time period, the difference between a power supply and demand plan and the power for which the electricity price increases determined for each time period may be transmitted as a demand response signal.

[Fourth embodiment]

Next, a fourth embodiment of the present invention will be described. In the second embodiment described above, the electric vehicle group power management device 30 generates an electric vehicle group available power plan including one peak-cut power plan and one bottom-up power plan, and transmits the electric vehicle group available power plan to the power supply and demand management device 20. However, the fourth embodiment differs from the second embodiment in that the electric vehicle group power management device 30 generates multiple peak-cut power plans which consider delay or advance of the power supply and demand plan for the entire power supply and demand system 1, and generates multiple bottom-up power plans which consider delay or advance of the power supply and demand plan for the entire power supply and demand system 1. The fourth embodiment also differs from the second embodiment in that the power supply and demand management device 20 selects one of the multiple peak-cut power plans and selects one of the multiple bottom-up power plans, based on at least a unit power rate which is an electric rate per unit amount of power. In the fourth embodiment, the power supply and demand management device 20 corrects the electric vehicle group available power plan, based on the electric vehicle group available power plan including the selected peak-cut power plan and the bottom-up power plan, and at least power control information on a facility whose power demand is controllable in the power supply and demand system 1. In the following description, the fourth embodiment of the present invention will be described mainly with respect to differences from the second embodiment.

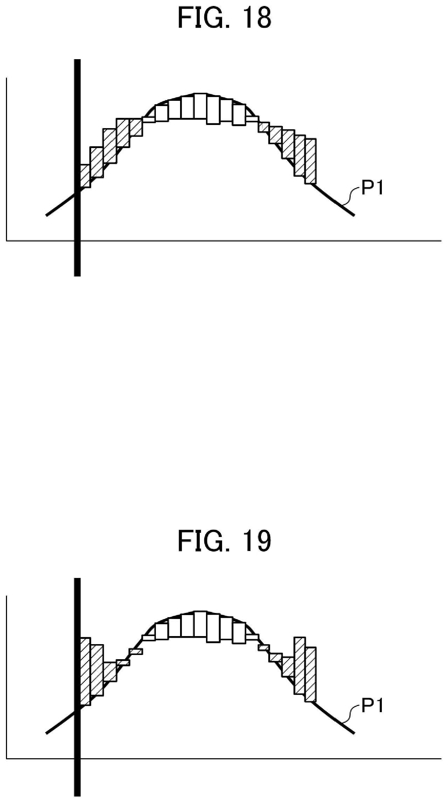

First, an example of the multiple peak-cut power plans generated by the electric vehicle group power management device 30 in the fourth embodiment will be described with reference to FIGS. 18 and 19. In FIGS. 18 and 19, the horizontal axis represents time, and the vertical axis represents power demand. FIGS. 18 and 19 illustrate examples of the multiple peak-cut power plans for the power supply and demand plan P1 of the entire facility where peak power demand occurs during the day.

The electric vehicle group available power plan generating unit 36 of the electric vehicle group power management device 30 generates a first peak-cut power plan such that charging of the electric vehicle battery 50 is delayed as much as possible, and discharging from the electric vehicle battery 50 is advanced as much as possible, as illustrated in FIG. 18, based on information such as power supply and demand plan information, an electric vehicle battery connection plan, and the state of the electric vehicle battery 50.

The electric vehicle group available power plan generating unit 36 generates a second peak-cut power plan such that charging of the electric vehicle battery 50 is advanced as much as possible, and discharging from the electric vehicle battery 50 is delayed as much as possible, as illustrated in FIG. 19, based on information such as power supply and demand plan information, an electric vehicle battery connection plan, and the state of the electric vehicle battery 50. Note that the electric vehicle group available power plan generating unit 36 may generate multiple power supply and demand plans where the time of the power supply and demand plan P1 is delayed or advanced by a predetermined time, and generate multiple peak-cut power plans based on each of the multiple power supply and demand plans.

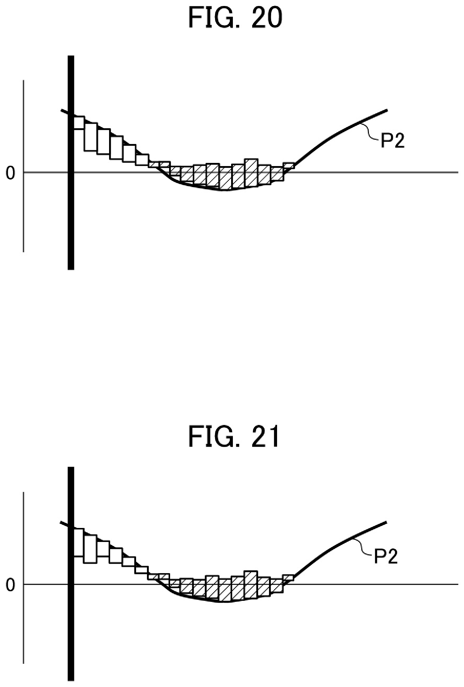

Next, examples of the multiple bottom-up power plans will be described with reference to FIGS. 20 and 21. In FIGS. 20 and 21, the horizontal axis represents time, and the vertical axis represents power demand. FIGS. 20 and 21 illustrate examples of the multiple bottom-up power plans for the power supply and demand plan P2 of the entire facility, where surplus power is generated during the day.

The electric vehicle group available power plan generating unit 36 generates a first bottom-up power plan such that discharging from the electric vehicle battery 50 is delayed as much as possible, and charging of the electric vehicle battery 50 is advanced as much as possible, as illustrated in FIG. 20, based on information such as power supply and demand plan information, an electric vehicle battery connection plan, and the state of the electric vehicle battery 50.

The electric vehicle group available power plan generating unit 36 generates a second bottom-up power plan such that discharging from the electric vehicle battery 50 is advanced as much as possible, and charging of the electric vehicle battery 50 is delayed as much as possible, as illustrated in FIG. 21, based on information such as power supply and demand plan information, an electric vehicle battery connection plan, and the state of the electric vehicle battery 50. Note that the electric vehicle group available power plan generating unit 36 may generate multiple power supply and demand plans where the time of the power supply and demand plan P2 is delayed or advanced by a predetermined time, and generate multiple bottom-up power plans based on each of the multiple power supply and demand plans.

The electric vehicle group available power plan generating unit 36 calculates a revenue amount when each of the multiple peak-cut power plans and the multiple bottom-up power plans is adopted, based on a unit amount of power. The electric vehicle group available power plan generating unit 36 selects one of the multiple peak-cut power plans and one of the multiple bottom-up power plans, based on the revenue amount. The electric vehicle group available power plan generating unit 36 generates an electric vehicle group available power plan including the selected peak-cut power plan and bottom-up power plan, and transmits it to the power supply and demand management device 20. Thereafter, the process proceeds to step S4 in FIG. 4, and the same process as in the second embodiment is executed.

In accordance with the above, multiple peak-cut power plans and bottom-up power plans when the power supply and demand plan P2 is increased by a predetermined ratio, and multiple peak-cut power plans and bottom-up power plans when the power supply and demand plan P2 is decreased by a predetermined ratio, may be generated, and multiple electric vehicle group available power plans may be generated based on each of the multiple peak-cut power plans and bottom-up power plans.

For example, a learning function concerning generation of an electric vehicle group available power plan may be provided such that transmitted data is stored and compared with an electric vehicle group power plan transmitted subsequently, and an electric vehicle group available power plan having a generation method not adopted for the electric vehicle group is not transmitted subsequently.

[Action and effect of fourth embodiment]

As described above, in the power supply and demand system 1 according to a fourth embodiment, the electric vehicle group power management device 30 generates multiple peak-cut power plans which consider at least one of delay or advance of charging and discharging of the electric vehicle battery 50 in the power supply and demand plan. The electric vehicle group power management device 30 also generates multiple bottom-up power plans which consider at least one of delay or advance of charging and discharging of the electric vehicle battery 50 in the power supply and demand plan. The electric vehicle group power management device 30 generates multiple electric vehicle group available power plans including the multiple peak-cut power plans and multiple bottom-up power plans, and outputs the multiple electric vehicle group available power plans to the power supply and demand management device 20. The power supply and demand management device 20 acquires the multiple electric vehicle group available power plans from the electric vehicle group power management device 30, and calculates a revenue amount when each of the multiple electric vehicle group available power plans is adopted, based on at least a unit power rate which is an electric rate per unit amount of power. The power supply and demand management device 20 selects one of the multiple electric vehicle group available power plans, based on the revenue amount, and corrects the selected electric vehicle group available power plan, based on at least power control information on a facility whose power demand is controllable in the power supply and demand system 1.

According to the method of managing charging and discharging according to the fourth embodiment, a power plan with the largest merit can be selected from multiple peak-cut power plans and multiple bottom-up power plans which consider uncertainty such as delay or advance in a power supply and demand plan for the entire power supply and demand system 1, and the selected power plan can be corrected based on at least power control information on a facility in the power supply and demand system 1. Thus, it is possible to generate a more optimal power plan for an electric vehicle charger 40 group which considers the power supply and demand plan for the entire power supply and demand system 1.

(Modification)

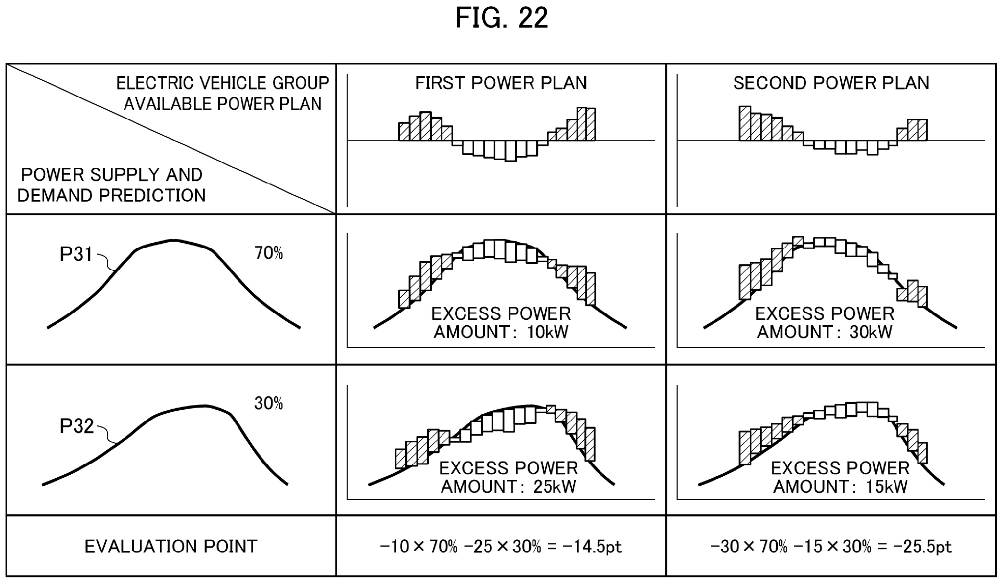

Next, a modification of the fourth embodiment will be described. In the modification of the fourth embodiment, the power supply and demand management device 20 may generate multiple power supply and demand plans which consider delay or advance of a power supply and demand plan for the entire power supply and demand system 1. For example, in FIG. 22, the power supply and demand management device 20 generates a power supply and demand plan P31, and a power supply and demand plan P32 which considers delay of the power supply and demand plan P31. In this case, the power supply and demand management device 20 predicts a probability of each of the multiple power supply and demand plans being executed. For example, in FIG. 20, the power supply and demand management device 20 predicts a first probability, which is 70%, of the power supply and demand plan P31 being executed, and a second probability, which is 30%, of the power supply and demand plan P32 being executed.

For example, in FIG. 22, the electric vehicle group power management device 30 acquires the two power supply and demand plans P31 and P32 from the power supply and demand management device 20. The electric vehicle group power management device 30 generates multiple peak-cut power plans and multiple bottom-up power plans, based on each of the power supply and demand plans P31 and P32. For example, as illustrated in FIG. 22, the electric vehicle group power management device 30 generates a peak-cut power plan (first power plan) such that the peak of the power supply and demand plan P31 is suppressed, and a peak-cut power plan (second power plan) such that the peak of the power supply and demand plan P32 is suppressed. The electric vehicle group power management device 30 similarly generates a bottom-up power plan such that the bottom of the generated power supply and demand plan P31 increases, and a bottom-up power plan such that the bottom of the power supply and demand plan P32 increases. The electric vehicle group power management device 30 transmits the generated multiple peak-cut power plans and multiple bottom-up power plans to the power supply and demand management device 20.

The power supply and demand management device 20 acquires the multiple peak-cut power plans and multiple bottom-up power plans from the electric vehicle group power management device 30. The power supply and demand management device 20 generates a power supply and demand plan for the entire power supply and demand system 1 when each of the multiple peak-cut power plans and multiple bottom-up power plans is adopted. The power supply and demand management device 20 calculates an excess power amount where each of the generated power supply and demand plans for the entire power supply and demand system 1 exceeds a predetermined target power peak value. In FIG. 22, for example, the power supply and demand management device 20 calculates an excess power amount of 10 kW when the first power plan is adopted in the power supply and demand plan P31, an excess power amount of 25 kW when the first power plan is adopted in the power supply and demand plan P32, an excess power amount of 30 kW when the second power plan is adopted in the power supply and demand plan P31, and an excess power amount of 15 kW when the second power plan is adopted in the power supply and demand plan P32.

The power supply and demand management device 20 selects one of the multiple peak-cut power plans, and selects one of the multiple bottom-up power plans, based on the probability of each of the multiple power supply and demand plans being executed, and the excess power amount when each of the multiple power supply and demand plans is adopted. For example, in FIG. 22, the power supply and demand management device 20 calculates an evaluation point of the first power plan according to equation (3) below, using the first probability of 70% of the power supply and demand plan P31 being executed, the second probability of 30% of the power supply and demand plan P32 being executed, and the excess power amounts 10 kW and 25 kW when the first power plan is adopted.

$$-(10 \times 0.7) - (25 \times 0.3) = -14.5 \qquad (3)$$

Further, for example, in FIG. 22, the power supply and demand management device 20 calculates an evaluation point of the second power plan according to equation (4) below, using the first probability of 70% of the power supply and demand plan P31 being executed, the second probability of 30% of the power supply and demand plan P32 being executed, and the excess power amounts 30 kW and 15 kW when the second power plan is adopted.

$$-(30 \times 0.7) - (15 \times 0.3) = -25.5 \qquad (4)$$

In FIG. 22, the power supply and demand management device 20 selects a power plan whose calculated evaluation point is higher. That is, in FIG. 22, the power supply and demand management device 20 selects the first power plan. The power supply and demand management device 20 similarly selects one of the multiple bottom-up power plans.

The power supply and demand management device 20 generates an electric vehicle group available power plan including the selected peak-cut power plan and bottom-up power plan, and performs the process after step S4 in FIG. 4 of the second embodiment with respect to the generated electric vehicle group available power plan.

As described above, in the power supply and demand system 1 according to the modified example of the fourth embodiment, the electric vehicle group power management device 30 generates multiple peak-cut power plans which consider a case where the power supply and demand plan is as planned, and a case where at least one of delay or advance occurs in the power supply and demand plan. The electric vehicle group power management device 30 generates multiple bottom-up power plans which consider a case where the power supply and demand plan is as planned, and a case where at least one of delay or advance occurs in the power supply and demand plan. The electric vehicle group power management device 30 outputs the multiple peak-cut power plans and the multiple bottom-up power plans to the power supply and demand management device 20. The power supply and demand management device 20 acquires the multiple peak-cut power plans and the multiple bottom-up power plans from the electric vehicle group power management device 30, and when each of the multiple peak-cut power plans and the multiple bottom-up power plans is adopted, calculates each excess power amount where each of the power supply and demand plans exceeds a predetermined target power peak value. The power supply and demand management device 20 selects one of the multiple peak-cut power plans and selects one of the multiple bottom-up power plans, based on each calculated excess power amount, a first probability that the power supply and demand plan is as planned, and a second probability that the power supply and demand plan is delayed or advanced. The power supply and demand management device 20 corrects the electric vehicle group available power plan including the selected peak-cut power plan and bottom-up power, based on at least power control information on a facility whose power demand is controllable in the power supply and demand system 1.

According to a modification of the fourth embodiment, a power plan with the largest merit can be selected from multiple peak-cut power plans and multiple bottom-up power plans which consider uncertainty such as delay or advance in the power supply and demand plan for the entire power supply and demand system 1, and the selected power plan can be corrected based on at least power control information on a facility in the power supply and demand system 1. Thus, it is possible to generate a more optimal power plan for the electric vehicle charger 40 group which considers the power supply and demand plan for the entire power supply and demand system 1.

Although the embodiments of the present invention have been described as described above, it should not be understood that the descriptions and drawings forming part of this disclosure are intended to limit the present invention. Various alternative embodiments, examples, and operational techniques will become apparent to those skilled in the art from this disclosure.

For example, the power supply and demand management device 20 generates a controllable load plan and an electric vehicle group power plan after receiving an electric vehicle group available power plan, and transmits the electric vehicle group power plan to the electric vehicle group power management device 30. It is also possible to repeatedly perform generating a power supply and demand plan for a controllable load and a non-renewable energy power generation facility after receiving the electric vehicle group available power plan, and based on the plan, generating again an electric vehicle group power plan. When the power supply and demand management device 20 has multiple power supply and demand plans, the multiple power supply and demand plans may be transmitted, and selection and correction of an electric vehicle group available power plan may be performed through a method using the present method, with each of the power supply and demand plans.

The power supply and demand management device 20 and the electric vehicle group power management device 30 according to the embodiments and modifications thereof can be realized by using a microcomputer having a CPU (central processing unit), a memory, and an input and output unit. A computer program for making the microcomputer function as the power supply and demand management device 20 and the electric vehicle group power management device 30 is installed in the microcomputer and executed. Thus, the microcomputer functions as multiple information processors provided in the power supply and demand management device 20 and the electric vehicle group power management device 30. Note that although an example of realizing the power supply and demand management device 20 and the electric vehicle group power management device 30 using software is described here, it is also possible to configure the power supply and demand management device 20 and the electric vehicle group power management device 30 by preparing dedicated hardware for executing each information processing. The dedicated hardware includes devices such as application-specific integrated circuits (ASIC) and conventional circuit components arranged to execute the functions described in the embodiments, variations thereof, or examples. The multiple information processors included in the power supply and demand management device 20 and the electric vehicle group power management device 30 may be configured by individual hardware. The power supply and demand management device 20 and the electric vehicle group power management device 30 may be separate or integrated.

REFERENCE SIGNS LIST

1    Power supply and demand system
20   Power supply and demand management device
30   Electric vehicle group power management device
40   Electric vehicle charger (charging and discharging device)
50   Electric vehicle battery (electric vehicle group battery)

## Claims

1. A power supply and demand system comprising: a power supply and demand management device configured to manage power supply and demand of an entirety of the power supply and demand system; and an electric vehicle group power management device configured to manage power to be charged and discharged by a charging and discharging device to and from one or more batteries of a group of one or more electric vehicles, wherein the electric vehicle group power management device is configured to:

   generate, in consideration of a state of the one or more batteries of the group of one or more electric vehicles, an electric vehicle group available power plan including at least a peak-cut power plan which is a charging and discharging plan for the one or more batteries of the group of one or more electric vehicles such that a peak of a power supply and demand plan which predicts a transition of the power supply and demand of the entirety of the power supply and demand system is suppressed; and
   output the electric vehicle group available power plan to the power supply and demand management device,

   the power supply and demand management device is configured to:

   acquire the electric vehicle group available power plan from the electric vehicle group power management device;
   correct the electric vehicle group available power plan based on at least power control information on a facility whose power demand is controllable in the power supply and demand system; and
   output the corrected electric vehicle group available power plan to the electric vehicle group power management device as an electric vehicle group power plan, and

   the electric vehicle group power management device is configured to:

   acquire the electric vehicle group power plan from the power supply and demand management device; and
   manage power to be charged and discharged by the charging and discharging device to and from the one or more batteries of the group of one or more electric vehicles, based on the electric vehicle group power plan.

2. The power supply and demand system according to claim 1, wherein the electric vehicle group power management device is configured to add, to the electric vehicle group available power plan, a bottom-up power plan which is a charging and discharging plan for the one or more batteries of the group of one or more electric vehicles such that a bottom of the power supply and demand plan increases.

3. The power supply and demand system according to claim 2, wherein

   the electric vehicle group power management device is configured to:

   generate a first electric vehicle group available power plan including the peak-cut power plan and the bottom-up power plan, and a second electric vehicle group available power plan where the one or more batteries of the group of one or more electric vehicles are charged and discharged according to a target period of a demand response in the power supply and demand plan; and
   output the first electric vehicle group available power plan and the second electric vehicle group available power plan to the power supply and demand management device,

   the power supply and demand management device is configured to;

   acquire the first electric vehicle group available power plan and the second electric vehicle group available power plan from the electric vehicle group power management device;
   calculate a revenue amount when each of the first electric vehicle group available power plan and the second electric vehicle group available power plan is adopted, based on at least a unit power rate which is an electric rate per unit amount of power;
   select one of the first electric vehicle group available power plan or the second electric vehicle group available power plan based on the revenue amount;
   correct the selected first electric vehicle group available power plan or second electric vehicle group available power plan, based on at least the power control information on the facility whose power demand is controllable in the power supply and demand system and information indicating the target period of the demand response; and
   output the corrected first electric vehicle group available power plan or second electric vehicle group available power plan to the electric vehicle group power management device as the electric vehicle group power plan, and

the electric vehicle group power management device is configured to:

acquire the electric vehicle group power plan from the power supply and demand management device; and manage the power to be charged and discharged by the charging and discharging device to and from the one or more batteries of the group of one or more electric vehicles, based on the electric vehicle group power plan.

4. The power supply and demand system according to claim 2, wherein

the electric vehicle group power management device is configured to:

generate a plurality of peak-cut power plans in consideration of at least one of delay or advance in charging and discharging of the one or more batteries of the group of one or more electric vehicles in the power supply and demand plan; generate a plurality of bottom-up power plans in consideration of at least one of delay or advance in charging and discharging of the one or more batteries of the group of one or more electric vehicles in the power supply and demand plan; generate a plurality of electric vehicle group available power plans including the plurality of peak-cut power plans and the plurality of bottom-up power plans; and output the plurality of electric vehicle group available power plans to the power supply and demand management device,

the power supply and demand management device is configured to:

acquire the plurality of electric vehicle group available power plans from the electric vehicle group power management device; calculate a revenue amount when each of the plurality of electric vehicle group available power plans is adopted, based on at least a unit power rate which is an electric rate per unit amount of power; select one of the plurality of electric vehicle group available power plans based on the revenue amount; and correct the selected electric vehicle group available power plan, based on at least the power control information on the facility whose power demand is controllable in the power supply and demand system.

5. The power supply and demand system according to claim 2, wherein

the electric vehicle group power management device is configured to;

generate a plurality of peak-cut power plans in consideration of a case where the power supply and demand plan is as planned and a case where at least one of delay or advance occurs in the power supply and demand plan; generate a plurality of bottom-up power plans in consideration of a case where the power supply and demand plan is as planned and a case where at least one of delay or advance occurs in the power supply and demand plan; and output the plurality of peak-cut power plans and the plurality of bottom-up power plans to the power supply and demand management device,

the power supply and demand management device is configured to:

acquire the plurality of peak-cut power plans and the plurality of bottom-up power plans from the electric vehicle group power management device; calculate each excess power amount by which each power supply and demand plan exceeds a predetermined target power peak value when each of the plurality of peak-cut power plans and the plurality of bottom-up power plans is adopted; select any one of the plurality of peak-cut power plans and any one of the plurality of bottom-up power plans, based on the calculated each excess power amount, a first probability that the power supply and demand plan is as planned, and a second probability that the power supply and demand plan delays or advances; and correct the electric vehicle group available power plan including the selected peak-cut power plan and the selected bottom-up power plan, based on at least the power control information on the facility whose power demand is controllable in the power supply and demand system.

6. A charging and discharging management method for an electric vehicle, performed by a power supply and demand system including: a power supply and demand management device configured to manage power supply and demand of an entirety of the power supply and demand system; and an electric vehicle group power management device configured to manage power to be charged and discharged by a charging and discharging device to and from one or more batteries of a group of one or more electric vehicles, the method comprising:

by the electric vehicle group power management device,

generating, in consideration of a state of the one or more batteries of the group of one or more electric vehicles, an electric vehicle group available power plan including at least a peak-cut power plan which is a charging and discharging plan for the one or more batteries of the group of one or more electric vehicles such that a peak of a power supply and demand plan which predicts a transition of power supply and demand of the entirety of the power supply and demand system is suppressed, and outputting the electric vehicle group available power plan to the power supply and demand management device;

by the power supply and demand management device,

acquiring the electric vehicle group available power plan from the electric vehicle group power management device, correcting the electric vehicle group available power plan, based on at least power control information on a facility whose power demand is controllable in the power supply and demand system, and outputting the corrected electric vehicle group available power plan to the electric vehicle group power management device, as an electric vehicle group power plan; and

by the electric vehicle group power management device,

acquiring the electric vehicle group power plan from the power supply and demand management device, and managing power that the charging and discharging device charges and discharges to and from the one or more batteries of the group of one or more electric vehicles, based on the electric vehicle group power

plan.

# FIG. 1

EP 4 783 397 A1

# FIG. 2

# FIG. 3

ELECTRIC VEHICLE GROUP POWER MANAGEMENT DEVICE

# FIG. 4

POWER SUPPLY AND DEMAND MANAGEMENT DEVICE

ELECTRIC VEHICLE GROUP POWER MANAGEMENT DEVICE

START

S1
PREDICT POWER SUPPLY AND DEMAND PLAN

S2
TRANSMIT ELECTRIC VEHICLE GROUP AVAILABLE POWER PLAN GENERATION COMMAND

S3
GENERATE ELECTRIC VEHICLE GROUP AVAILABLE POWER PLAN

S4
DETERMINE ELECTRIC VEHICLE GROUP POWER PLAN

S5
TRANSMIT POWER CONTROL COMMAND

S6
UPDATE POWER SUPPLY AND DEMAND PLAN AND PERFORM CONTROL

S7
UPDATE ELECTRIC VEHICLE GROUP POWER PLAN AND PERFORM CONTROL

END

END

## FIG. 5

POWER UPPER
LIMIT PLAN

POWER LOWER
LIMIT PLAN

# FIG. 6

```
          ┌──────────────┐
          │    START     │
          └──────┬───────┘
                 │
                 ▼
  ┌─────────────────────────────┐
  │  ACQUIRE ELECTRIC VEHICLE   │── S11
  │  BATTERY CONNECTION PLAN    │
  └──────────────┬──────────────┘
                 │
                 ▼
  ┌─────────────────────────────┐
  │      ACQUIRE STATE OF       │── S12
  │      ELECTRIC VEHICLE       │
  └──────────────┬──────────────┘
                 │
                 ▼
  ┌─────────────────────────────┐
  │  GENERATE ELECTRIC VEHICLE  │── S13
  │ GROUP AVAILABLE POWER PLAN  │
  └──────────────┬──────────────┘
                 │
                 ▼
  ┌─────────────────────────────┐
  │  TRANSMIT ELECTRIC VEHICLE  │── S14
  │ GROUP AVAILABLE POWER PLAN  │
  └──────────────┬──────────────┘
                 │
                 ▼
          ┌──────────────┐
          │     END      │
          └──────────────┘
```

# FIG. 7

PEAK MINIMUM VALUE

P1

# FIG. 8

P2

PEAK MINIMUM VALUE

# FIG. 9

START

GENERATE FIRST TEMPORARY POWER SUPPLY AND DEMAND PLAN BASED ON PEAK-CUT POWER PLAN — S2101

GENERATE POWER SUPPLY AND DEMAND PLAN FOR CONTROL TARGET FACILITIES BASED ON POWER CONTROL INFORMATION ON CONTROL TARGET FACILITIES — S2102

ACQUIRE ANNUAL POWER PEAK TARGET BASED ON PEAK OF POWER SUPPLY AND DEMAND PLAN IN THE PAST — S2103

DETERMINE PEAK OF POWER SUPPLY AND DEMAND PLAN BASED ON POWER SUPPLY AND DEMAND PLAN FOR CONTROL TARGET FACILITIES, AND FIRST TEMPORARY POWER SUPPLY AND DEMAND PLAN — S2104

SET THE LARGER OF ANNUAL POWER PEAK TARGET VALUE AND PEAK OF POWER SUPPLY AND DEMAND PLAN, AS UPPER LIMIT OF AVAILABLE POWER — S2105

SET VALUE OBTAINED BY SUBTRACTING POWER SUPPLY AND DEMAND PLAN OF CONTROL TARGET FACILITIES FROM UPPER LIMIT OF AVAILABLE POWER, AS POWER UPPER LIMIT PLAN VALUE — S2106

DETERMINE POWER UPPER LIMIT PLAN — S2107

END

# FIG. 10

EP 4 783 397 A1

PEAK-CUT POWER PLAN

L1 > Pe1

L1 < Pe1

# FIG. 11

BOTTOM MAXIMUM VALUE

P1

# FIG. 12

P2

BOTTOM MAXIMUM VALUE

# FIG. 13

```
        ( START )
            │
            ▼
┌─────────────────────┐
│  GENERATE POWER     │ ─── S21
│  UPPER LIMIT PLAN   │
└─────────────────────┘
            │
            ▼
┌─────────────────────┐
│  GENERATE POWER     │ ─── S22
│  LOWER LIMIT PLAN   │
└─────────────────────┘
            │
            ▼
         S23
      ◇ POWER
   UPPER LIMIT ≧ POWER          NO
   LOWER LIMIT IN ALL TIME ──────────────┐
        ZONES? ◇                         │
            │                            │
           YES  S24                      │  S25
            ▼                            ▼
┌──────────────────────┐    ┌──────────────────────┐
│ TRANSMIT POWER UPPER │    │ SELECT PLAN WITH     │
│ LIMIT PLAN AND POWER │    │ LARGER MERIT FROM    │
│ LOWER LIMIT PLAN TO  │    │ POWER UPPER LIMIT    │
│ EV GROUP POWER       │    │ PLAN AND POWER       │
│ MANAGEMENT DEVICE    │    │ LOWER LIMIT PLAN     │
└──────────────────────┘    └──────────────────────┘
            │                            │  S26
            │                            ▼
            │               ┌──────────────────────┐
            │               │ TRANSMIT SELECTED    │
            │               │ PLAN TO ELECTRIC     │
            │               │ VEHICLE GROUP        │
            │               │ POWER MANAGEMENT     │
            │               │ DEVICE               │
            │               └──────────────────────┘
            │                            │
            ◄────────────────────────────┘
            │
            ▼
         ( END )
```

# FIG. 14

START

GENERATE SECOND TEMPORARY POWER SUPPLY AND DEMAND PLAN BASED ON BOTTOM-UP POWER PLAN — S2201

DETERMINE POWER SUPPLY AND DEMAND PLAN FOR CONTROL TARGET FACILITIES, BASED ON POWER CONTROL INFORMATION ON CONTROL TARGET FACILITIES — S2202

DETERMINE POWER SUPPLY AND DEMAND PLAN BASED ON POWER SUPPLY AND DEMAND PLAN FOR CONTROL TARGET FACILITIES AND SECOND TEMPORARY POWER SUPPLY AND DEMAND PLAN — S2203

S2204
$0 <$ POWER SUPPLY AND DEMAND PLAN?

NO →

YES

S2205
SET VALUE OBTAINED BY SUBTRACTING VALUE OF POWER SUPPLY AND DEMAND PLAN FROM VALUE OF BOTTOM-UP POWER PLAN AS POWER LOWER LIMIT PLAN VALUE

S2206
SET BOTTOM-UP POWER PLAN AS POWER LOWER LIMIT PLAN VALUE

DETERMINE POWER LOWER LIMIT PLAN — S2207

END

FIG. 15

BOTTOM-UP POWER PLAN

## FIG. 16

# FIG. 17A

START

GENERATE FIRST TEMPORARY POWER SUPPLY AND DEMAND PLAN AND THIRD TEMPORARY POWER SUPPLY AND DEMAND PLAN USING PEAK-CUT POWER PLAN AND DEMAND RESPONSE POWER PLAN, RESPECTIVELY — S301

GENERATE POWER SUPPLY AND DEMAND PLAN FOR CONTROL TARGET FACILITIES, BASED ON POWER CONTROL INFORMATION ON CONTROL TARGET FACILITIES AND DEMAND RESPONSE PARTICIPATION / NON-PARTICIPATION — S302

CALCULATE RESPECTIVE MERITS OF PEAK-CUT POWER PLAN AND DEMAND RESPONSE POWER PLAN — S303

SELECT POWER PLAN WITH LARGER MERIT — S304

A

# FIG. 17B

A

ACQUIRE ANNUAL POWER PEAK TARGET VALUE BASED ON PEAK OF POWER SUPPLY AND DEMAND PLAN IN THE PAST — S305

ACQUIRE TARGET VALUE AND TARGET TIME OF DEMAND RESPONSE — S306

S307
TARGET TIME OF DEMAND RESPONSE? — NO

YES | S308
SET TARGET VALUE OF DEMAND RESPONSE AS ALLOWABLE UPPER LIMIT POWER FOR SUPPLY AND DEMAND

S309
SET ANNUAL POWER PEAK TARGET VALUE AS ALLOWABLE UPPER LIMIT POWER FOR SUPPLY AND DEMAND

S310
ALLOWABLE UPPER LIMIT POWER FOR SUPPLY AND DEMAND > POWER SUPPLY AND DEMAND PLAN? — NO

YES | S311
SET VALUE OBTAINED BY SUBTRACTING POWER SUPPLY AND DEMAND PLAN FOR CONTROL TARGET FACILITIES FROM ANNUAL POWER PEAK TARGET VALUE AS POWER UPPER LIMIT PLAN VALUE

S312
SET SELECTED POWER PLAN AS POWER UPPER LIMIT PLAN

DETERMINE POWER UPPER LIMIT PLAN — S313

END

FIG. 18

P1

FIG. 19

P1

## FIG. 20

## FIG. 21

## FIG. 22

| ELECTRIC VEHICLE GROUP AVAILABLE POWER PLAN / POWER SUPPLY AND DEMAND PREDICTION | FIRST POWER PLAN | SECOND POWER PLAN |
|---|---|---|
| P31    70% | EXCESS POWER AMOUNT: 10kW | EXCESS POWER AMOUNT: 30kW |
| P32    30% | EXCESS POWER AMOUNT: 25kW | EXCESS POWER AMOUNT: 15kW |
| EVALUATION POINT | $-10 \times 70\% - 25 \times 30\% = -14.5\text{pt}$ | $-30 \times 70\% - 15 \times 30\% = -25.5\text{pt}$ |

EP 4 783 397 A1

## INTERNATIONAL SEARCH REPORT

| International application No. |
|---|
| **PCT/JP2023/033918** |

| A. CLASSIFICATION OF SUBJECT MATTER |
|---|
| *H02J 3/14*(2006.01)i; *H02J 3/32*(2006.01)i<br>FI: H02J3/14; H02J3/32 |
| According to International Patent Classification (IPC) or to both national classification and IPC |

| B. FIELDS SEARCHED |
|---|
| Minimum documentation searched (classification system followed by classification symbols)<br>H02J3/14; H02J3/32 |
| Documentation searched other than minimum documentation to the extent that such documents are included in the fields searched<br><br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 2020-178472 A (KABUSHIKI KAISHA TOYOTA JIDOSHOKKI) 29 October 2020 (2020-10-29)<br>entire text, all drawings | 1-6 |
| A | JP 2022-85689 A (HITACHI INFORMATION & TELECOMMUNICATION ENGINEERING LTD.) 08 June 2022 (2022-06-08)<br>entire text, all drawings | 1-6 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

41

**INTERNATIONAL SEARCH REPORT**
Information on patent family members

International application No.

**PCT/JP2023/033918**

| Patent document cited in search report | | | Publication date (day/month/year) | Patent family member(s) | Publication date (day/month/year) |
|---|---|---|---|---|---|
| JP | 2020-178472 | A | 29 October 2020 | (Family: none) | |
| JP | 2022-85689 | A | 08 June 2022 | (Family: none) | |

Form PCT/ISA/210 (patent family annex) (January 2015)

**EP 4 783 397 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012196028 A